# EUROPEAN PATENT APPLICATION

(11) **EP 4 779 477 A1**
(43) Date of publication of application: **22.07.2026**
(21) Application number: 24876449.0
(22) Date of filing: 29.09.2024
(51) Int. Cl.: G06F 11/14

(54) **DISASTER RECOVERY METHOD, APPARATUS AND SYSTEM**

(30) Priority: 09.10.2023 CN 202311298966
(71) Applicant: HUAWEI TECHNOLOGIES CO., LTD., Shenzhen 518129 (CN)
(72) Inventor: WANG, Xiuwu, Shenzhen, Guangdong 518129 (CN); LIU, Bin, Shenzhen, Guangdong 518129 (CN)
(74) Representative: Pfenning, Meinig & Partner mbB
(86) International application number: PCT/CN2024/122520
(87) International publication number: WO 2025/077634

(57) **Abstract**

A disaster recovery method, apparatus, and system are provided, and may be applied to the field of storage technologies. The method includes: A first data center synchronously replicates backup data to a second data center through a first synchronous replication link. When a third data center is normal, the first data center asynchronously replicates the backup data to the third data center through a first asynchronous replication link. When the third data center is faulty, the first data center asynchronously replicates the backup data to a fourth data center through a second asynchronous replication link. Both the first data center and the second data center are production centers, and the first data center and the second data center are located in a first region. Both the third data center and the fourth data center are disaster recovery centers, and the third data center and the fourth data center are located in a second region. In this application, stepwise degradation of disaster recovery performance of the disaster recovery system can be achieved, to meet user requirements to a greatest extent.

## Description

This application claims priority to Chinese Patent Application No. 202311298966.3, filed with the China National Intellectual Property Administration on October 9, 2023 and entitled "DISASTER RECOVERY METHOD, APPARATUS, AND SYSTEM", which is incorporated herein by reference in its entirety.

### TECHNICAL FIELD

This application relates to the field of storage technologies, and in particular, to a disaster recovery method, apparatus, and system.

### BACKGROUND

A disaster recovery system can provide an environment for a service system to cope with various disasters, to ensure availability and data integrity of the service system. In an existing disaster recovery system, a first data center (data center 1, DC 1) serves as a production center carrying services, and forms active-active data centers with a production center DC 2 in a same region, to keep data of the DC 1 and data of the DC 2 synchronized in real time. Further, based on data transmission between the DC 2 and a DC 3 and data transmission between the DC 3 and a DC 4, the DC 1 achieves consistency of service data with the other three DCs. Specifically, an asynchronous replication technology is employed between the DC 2 and the DC 3, which is a disaster recovery center in another city, to enable the data of the DC 2 and data of the DC 3 to be periodically synchronized, so that the data of the DC 1 and the data of the DC 3 can be periodically synchronized. The DC 3 performs real-time data transmission with the DC 4, which is a disaster recovery center in a same region, to enable the data of the DC 1 and data of the DC 4 to be periodically synchronized. In conclusion, in the disaster recovery system formed in a "serial" manner, when all the four DCs operate normally, the data of the DC 1 can be kept consistent with the data of the other three DCs.

However, when the production center DC 2 suffers data corruption as a result of force-majeure natural disasters such as fire, flood, earthquake, and tsunami, and human-made disasters such as computer crimes, computer viruses, power outages, network/communication failures, hardware/software errors, and human operational errors, although the production center DC 1 may take over services on the DC 2, the DC 1 becomes an "isolated island" because the DC 1 cannot communicate with the disaster recovery centers DC 3 and DC 4. Consequently, the DC 1 losses disaster recovery protection provided by the disaster recovery centers DC 3 and DC 4. Therefore, when the production center DC 2 is faulty, a disaster recovery scale of the disaster recovery system decreases from four data centers to one data center, resulting in sharp degradation of disaster recovery performance of the disaster recovery system.

### SUMMARY

To resolve the foregoing technical problem, this application provides a disaster recovery method, apparatus, and system, to achieve stepwise degradation of disaster recovery performance of the disaster recovery system, so as to meet user requirements to a greatest extent.

According to a first aspect, a disaster recovery system is provided. The disaster recovery system includes a first data center, a second data center, a third data center, and a fourth data center. Both the first data center and the second data center are production centers, both the third data center and the fourth data center are disaster recovery centers, the first data center and the second data center are located in a first region, and the third data center and the fourth data center are located in a second region different from the first region. A first synchronous replication link exists between the first data center and the second data center, a second synchronous replication link exists between the third data center and the fourth data center, and a first asynchronous replication link exists between the first data center and the third data center. Further, the disaster recovery system further includes one or more of the following backup asynchronous replication links: a second asynchronous replication link between the first data center and the fourth data center, a third asynchronous replication link between the second data center and the third data center, and a fourth asynchronous replication link between the second data center and the fourth data center. A synchronous replication link is used for synchronous replication of backup data of data centers at two ends of the synchronous replication link. An asynchronous replication link is used for asynchronous replication of backup data of data centers at two ends of the asynchronous replication link. A backup asynchronous replication link is used for asynchronous replication of backup data between the first region and the second region when the first data center or the third data center is faulty.

In the foregoing solution, after the first synchronous replication link, the second synchronous replication link, and the first asynchronous replication link are established, one, two, or three backup asynchronous replication links are established, to enable direct transmission of backup data between data centers at two ends of the backup asynchronous replication link, so as to achieve synchronization of the backup data. Therefore, there is a disaster recovery protection relationship between the data centers at the two ends of the backup asynchronous replication link. When the first data center or the third data center is faulty, three remaining data centers that operate normally can still implement synchronization of the backup data through the backup asynchronous replication links, so that a disaster recovery scale of the disaster recovery system decreases from four data centers to three data centers, and disaster recovery performance degrades in a stepwise manner, to meet user requirements to a greatest extent.

In some possible implementations, the plurality of backup asynchronous replication links are backup links for each other.

In the foregoing solution, the plurality of backup asynchronous replication links are backup links for each other. Accordingly, when any two data centers are faulty, for example, two data centers are faulty simultaneously, or one data center is faulty first, and another data center is also faulty after operating normally for a period of time, the disaster recovery system can still implement asynchronous replication of the backup data through the backup link, to synchronize backup data of two remaining data centers that operate normally, so that the disaster recovery scale of the disaster recovery system decreases from four data centers to two data centers, and the disaster recovery performance degrades in a stepwise manner. Alternatively, when any two asynchronous replication links are suddenly faulty, the disaster recovery system can still implement asynchronous replication of the backup data through the backup links, to achieve backup data synchronization among the four data centers. In this case, the disaster recovery scale of the disaster recovery system remains four data centers.

In some possible implementations, the backup data is a snapshot or a log.

In some possible implementations, the first data center and the second data center are active-active data centers. The first data center and the second data center are configured to provide a same service and a same logical unit number LUN externally, to enable a client to access the first data center or the second data center via the LUN, and to enable, when the first data center or the second data center is faulty, access of the client to be switched, via the LUN, to a data center that is not faulty in the first data center and the second data center.

In the foregoing solution, the first data center and the second data center form active-active data centers, so that both the two data centers can carry services, thereby achieving high compatibility and applicability, high resource utilization, and good user experience.

In some possible implementations, the third data center and the fourth data center are active-active data centers. The third data center and the fourth data center are configured to provide a same service and a same logical unit number LUN externally, to enable the client to access the third data center or the fourth data center via the LUN, and to enable, when the third data center or the fourth data center is faulty, access of the client to be switched, via the LUN, to a data center that is not faulty in the third data center and the fourth data center.

In the foregoing solution, the third data center and the fourth data center form active-active data centers, so that both the two data centers can carry services, thereby achieving high compatibility and applicability, high resource utilization, and good user experience.

According to a second aspect, a disaster recovery method is provided. The disaster recovery method includes: A first data center synchronously replicates backup data to a second data center through a first synchronous replication link. In addition, when a third data center is normal, the first data center asynchronously replicates the backup data to the third data center through a first asynchronous replication link. When the third data center is faulty, the first data center asynchronously replicates the backup data to a fourth data center through a second asynchronous replication link. Both the first data center and the second data center are production centers, the first data center and the second data center are located in a first region, both the third data center and the fourth data center are disaster recovery centers, and the third data center and the fourth data center are located in a second region different from the first region.

In the foregoing solution, the first data center synchronously replicates the backup data to the second data center through the first synchronous replication link, to keep backup data of the first data center and the second data center consistent in real time. When the third data center is normal, the first data center asynchronously replicates the backup data to the third data center through the first asynchronous replication link, to keep backup data of the first data center and the third data center consistent. Therefore, synchronization of backup data of the first data center, the second data center, and the third data center is achieved. In addition, when the third data center is faulty, the first data center may still send backup data to the fourth data center through the second asynchronous replication link, to achieve synchronization between backup data of the first data center and backup data of the fourth data center. In other words, a disaster recovery protection relationship between the first data center and the fourth data center is established. When there is the disaster recovery protection relationship between the first data center and the fourth data center, if the second data center operates normally, a disaster recovery scale of the disaster recovery system decreases from four data centers to three data centers, and disaster recovery performance degrades in a stepwise manner. If the second data center is also faulty, the disaster recovery scale of the disaster recovery system decreases from four data centers to two data centers, and the disaster recovery performance still degrades in a stepwise manner, to meet user requirements to a greatest extent.

In some possible implementations, the method further includes: When the first data center is faulty, the second data center asynchronously replicates the backup data to the third data center through a third asynchronous replication link, or the second data center asynchronously replicates the backup data to the fourth data center through a fourth asynchronous replication link.

In the foregoing solution, when the first data center is faulty, the third data center may still receive, through the third asynchronous replication link, the backup data sent by the second data center, to achieve synchronization between backup data of the third data center and backup data of the second data center. In other words, a disaster recovery protection relationship between the second data center and the third data center is established. When there is the disaster recovery protection relationship between the second data center and the third data center, if the fourth data center operates normally, the disaster recovery scale of the disaster recovery system decreases from four data centers to three data centers, and the disaster recovery performance degrades in a stepwise manner. If the fourth data center is also faulty, the disaster recovery scale of the disaster recovery system decreases from four data centers to two data centers, and the disaster recovery performance still degrades in a stepwise manner, to meet user requirements to a greatest extent.

In some possible implementations, the backup data is a snapshot or a log.

In some possible implementations, the first data center and the second data center are active-active data centers. The first data center and the second data center provide a same service and a same logical unit number LUN externally, to enable a client to access the first data center or the second data center via the LUN, and to enable, when the first data center or the second data center is faulty, access of the client to be switched, via the LUN, to a data center that is not faulty in the first data center and the second data center.

In some possible implementations, that the first data center synchronously replicates the backup data to the second data center through the first synchronous replication link includes:

The first data center synchronously replicates, to the second data center through the first synchronous replication link, the backup data and data generated during access of the client to the first data center.

In the foregoing solution, in addition to synchronously replicating the backup data, the first data center further synchronously replicates, to the second data center, the data generated during access of the client, so that data of the first data center and data of the second data center can be synchronized in real time.

In some possible implementations, the third data center and the fourth data center are active-active data centers. The third data center and the fourth data center provide a same service and a same logical unit number LUN externally, to enable the client to access the third data center or the fourth data center via the LUN, and to enable, when the third data center or the fourth data center is faulty, access of the client to be switched, via the LUN, to a data center that is not faulty in the third data center and the fourth data center.

According to a third aspect, a disaster recovery apparatus is provided, and is used as a first disaster recovery apparatus. The disaster recovery apparatus includes a synchronous replication module and an asynchronous replication module. The synchronous replication module is configured to synchronously replicate backup data to the second disaster recovery apparatus through a first synchronous replication link. The asynchronous replication module is configured to, when a third disaster recovery apparatus is normal, asynchronously replicate the backup data to a third disaster recovery apparatus through a first asynchronous replication link. The asynchronous replication module is further configured to, when the third disaster recovery apparatus is faulty, asynchronously replicate the backup data to a fourth disaster recovery apparatus through a second asynchronous replication link. Both the first disaster recovery apparatus and the second disaster recovery apparatus are production centers, the first disaster recovery apparatus and the second disaster recovery apparatus are located in a first region, both the third disaster recovery apparatus and the fourth disaster recovery apparatus are disaster recovery centers, and the third disaster recovery apparatus and the fourth disaster recovery apparatus are located in a second region different from the first region.

In some possible implementations, the backup data is a snapshot or a log.

In some possible implementations, the first disaster recovery apparatus and the second disaster recovery apparatus provide a same service and a same logical unit number LUN externally, to enable a client to access the first disaster recovery apparatus or the second disaster recovery apparatus via the LUN, and to enable when the first disaster recovery apparatus or the second disaster recovery apparatus is faulty, access of the client to be switched, via the LUN, to a disaster recovery apparatus that is not faulty in the first disaster recovery apparatus and the second disaster recovery apparatus.

In some possible implementations, the synchronous replication module is specifically configured to synchronously replicate, to the second disaster recovery apparatus through the first synchronous replication link, the backup data and data generated during access of the client to the first disaster recovery apparatus.

According to a fourth aspect, a storage server is provided. The storage server includes a processor and a memory. The memory is configured to store instructions, and the processor is configured to execute the instructions. When the processor executes the instructions, the method according to any one of the implementations in the second aspect is performed.

According to a fifth aspect, a computer program product including instructions is provided. When the instructions are run by a compute device, the compute device is caused to perform the method according to any one of the implementations in the second aspect.

According to a sixth aspect, a computer-readable storage medium is provided. The computer-readable storage medium includes computer program instructions. When the computer program instructions are executed by a compute device, the compute device performs the method according to any one of the implementations in the second aspect.

### BRIEF DESCRIPTION OF DRAWINGS

To describe the technical solutions in embodiments or in the background of this application more clearly, the following describes the accompanying drawings for describing embodiments or the background of this application.
FIG. 1 is a diagram of a structure of a disaster recovery system according to this application;
FIG. 2A is a diagram of a structure of a disaster recovery system in a normal operating mechanism according to this application;
FIG. 2B is a diagram of a structure of a disaster recovery system in another normal operating mechanism according to this application;
FIG. 2C is a diagram of a structure of a disaster recovery system in another normal operating mechanism according to this application;
FIG. 2D is a diagram of a structure of a disaster recovery system in another normal operating mechanism according to this application;
FIG. 3 is a schematic flowchart of a data synchronization method according to this application;
FIG. 4A is a diagram of an operating mechanism of a disaster recovery system in which a data center A is faulty according to this application;
FIG. 4B is a diagram of another operating mechanism of a disaster recovery system in which a data center A is faulty according to this application;
FIG. 4C is a diagram of an operating mechanism of a disaster recovery system in which a data center B is faulty according to this application;
FIG. 4D is a diagram of an operating mechanism of a disaster recovery system in which a data center C is faulty according to this application;
FIG. 4E is a diagram of another operating mechanism of a disaster recovery system in which a data center C is faulty according to this application;
FIG. 4F is a diagram of an operating mechanism of a disaster recovery system in which a data center D is faulty according to this application;
FIG. 4G is a diagram of an operating mechanism of a disaster recovery system in which data centers A and B are faulty according to this application;
FIG. 4H is a diagram of an operating mechanism of a disaster recovery system in which data centers A and C are faulty according to this application;
FIG. 4I is a diagram of an operating mechanism of a disaster recovery system in which data centers A and D are faulty according to this application;
FIG. 4J is a diagram of an operating mechanism of a disaster recovery system in which data centers B and C are faulty according to this application;
FIG. 4K is a diagram of an operating mechanism of a disaster recovery system in which data centers B and D are faulty according to this application;
FIG. 4L is a diagram of an operating mechanism of a disaster recovery system in which data centers C and D are faulty according to this application;
FIG. 4M is a diagram of an operating mechanism of a disaster recovery system in which an asynchronous replication link between data centers A and C is faulty according to this application;
FIG. 4N is a diagram of another operating mechanism of a disaster recovery system in which an asynchronous replication link between data centers A and C is faulty according to this application;
FIG. 4O is a diagram of another operating mechanism of a disaster recovery system in which an asynchronous replication link between data centers A and C is faulty according to this application;
FIG. 5 is a schematic flowchart of a disaster recovery method according to this application;
FIG. 5A is a schematic flowchart of a preset disaster recovery scheme used when a data center A is faulty according to this application;
FIG. 5B is a schematic flowchart of a preset disaster recovery scheme used when a data center C is faulty according to this application;
FIG. 5C is a schematic flowchart of a preset disaster recovery scheme used when two data centers are faulty according to this application;
FIG. 5D is a schematic flowchart of a preset disaster recovery scheme used when any asynchronous replication link is faulty according to this application;
FIG. 6 is a diagram of a structure of a disaster recovery apparatus according to this application; and
FIG. 7 is a diagram of a structure of a storage server according to this application.

### DESCRIPTION OF EMBODIMENTS

The following describes embodiments of this application with reference to the accompanying drawings in embodiments of this application.

To resolve a problem that, in an existing disaster recovery system, disaster recovery performance of the disaster recovery system degrades sharply when a DC 2 is faulty, this application provides a disaster recovery method, apparatus, and system, to achieve full-mesh networking among four data centers, so that there is a disaster recovery protection relationship between any two data centers, and stepwise degradation of disaster recovery performance of the disaster recovery system can be achieved, to meet user requirements to a greatest extent.

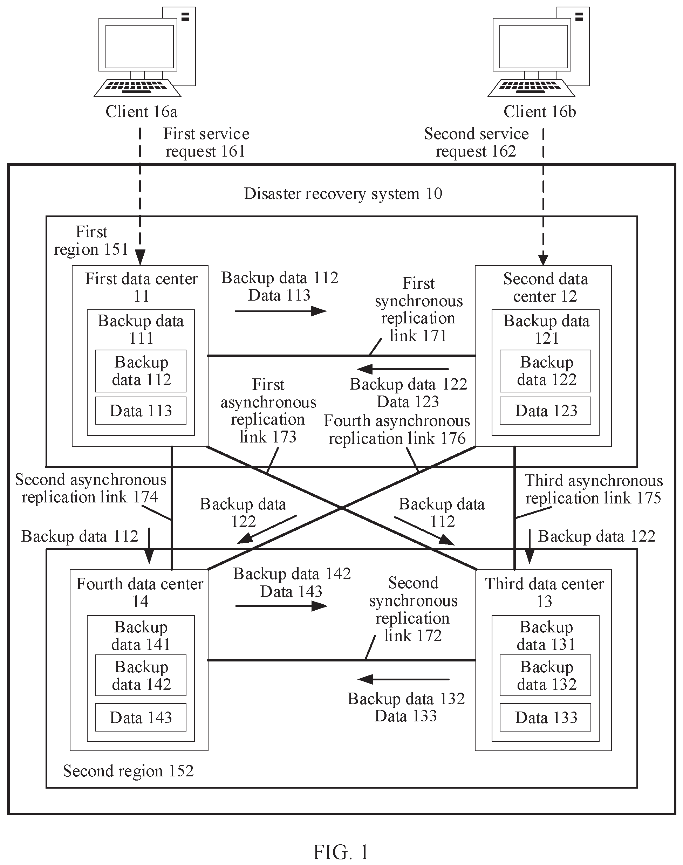

FIG. 1 is a diagram of a structure of a disaster recovery system according to this application. The disaster recovery system is for providing an environment for a service system to cope with various disasters, to ensure availability and service data integrity of the service system. As shown in FIG. 1, the disaster recovery system 10 includes four data centers: a first data center 11 (DC 11), a second data center 12 (DC 12), a third data center 13 (DC 13), and a fourth data center 14 (DC 14). Both the DC 11 and the DC 12 are production centers, both the DC 13 and the DC 14 are disaster recovery centers, the DC 11 and the DC 12 are in a first region 151, the DC 13 and the DC 14 are in a second region 152, and the first region 151 and the second region 152 are different regions. A region describes a geographical location relationship, and may be a country, a province, a city, or the like. The DC 11 and the DC 12 are located in the same region, and therefore are at a shorter geographical distance from each other, for example, in a same city. The DC 11 and the DC 13 are located in different regions, and therefore are at a longer geographical distance from each other, for example, in different cities.

In the disaster recovery system 10, the DC 11 and the DC 12 in the first region 151 form active-active data centers, so that both the two data centers can carry services, thereby achieving high compatibility and applicability, high resource utilization, and good user experience. Specifically, when all the four data centers operate normally, the DC 11 and the DC 12 jointly carry a service in the first region 151. The DC 11 and the DC 12 provide a same logical unit number (LUN) and a same service externally, to enable a client 16a to access the DC 11 or the DC 12 via the LUN, to handle a service for a user. In this case, the DC 11 is responsible for generating, storing, and managing backup data 111 of the DC 11, and the DC 12 is responsible for generating, storing, and managing backup data 121 of the DC 12. The DC 13 serves as a disaster recovery center for storing backup data, and is responsible for storing and managing backup data 131 of the DC 13. The DC 14 serves as a disaster recovery center for storing backup data, and is responsible for storing and managing backup data 141 of the DC 14. When the DC 11 or the DC 12 is faulty, access of the client 16a is switched, via the LUN, to a data center that is not faulty in the DC 11 and the DC 12. When both the DC 11 and the DC 12 are faulty, the DC 13 and the DC 14 form active-active data centers to jointly carry the service in the first region 151. Specifically, the DC 13 and the DC 14 provide a same LUN and a same service externally, to enable the client 16a to access the DC 13 or the DC 14 via the LUN, to handle the service for the user. In this case, the DC 13 is responsible for generating, storing, and managing the backup data 131, and the DC 14 is responsible for generating, storing, and managing the backup data 141.

In the disaster recovery system 10, a synchronous replication link is established between two data centers in a same region, to enable the two data centers in the same region to synchronously replicate backup data. That the synchronous replication link is established between the two data centers in the same region includes the following steps.
(1) A first synchronous replication link 171 is established between the DC 11 and the DC 12. In a specific implementation, when the first synchronous replication link 171 is in a normal state, the first synchronous replication link 171 is in a communication connection with the DC 11 and the DC 12, and is configured to: send backup data 112 generated by the DC 11 to the DC 12; or send backup data 122 generated by the DC 12 to the DC 11, so that the backup data 111 of the DC 11 and the backup data 121 of the DC 12 are synchronized in real time to maintain consistency. In another specific implementation, when the first synchronous replication link 171 is in a normal state, the first synchronous replication link 171 is further configured to: send, to the DC 12, data 113 generated during a first change operation performed by the DC 11 based on a first service request 161 sent by the client 16a; or send, to the DC 11, data 123 generated during a second change operation performed by the DC 12 based on a second service request 162 sent by a client 16b. The first change operation or the second change operation includes an addition operation, a write operation, a modification operation, a deletion operation, or the like.
(2) A second synchronous replication link 172 is established between the DC 13 and the DC 14. In a specific implementation, when the second synchronous replication link 172 is in a normal state, the second synchronous replication link 172 is in communication connection with the DC 13 and the DC 14, and is configured to: send backup data 132 of the DC 13 to the DC 14; or send backup data 142 of the DC 14 to the DC 13, so that the backup data 131 of the DC 13 and the backup data 141 of the DC 14 are synchronized in real time to maintain consistency. When both the DC 11 and the DC 12 are faulty and the second synchronous replication link 172 is in a normal state, the second synchronous replication link 172 is further configured to: send, to the DC 14, data 133 generated during a third change operation performed by the DC 13 based on a service request sent by the client 16a or the client 16b; or send, to the DC 14, data 143 generated during a fourth change operation performed by the DC 14 based on a service request sent by the client 16a or the client 16b. The third change operation or the fourth change operation includes an addition operation, a write operation, a modification operation, a deletion operation, or the like.

In the disaster recovery system 10, an asynchronous replication link is established between two data centers in different regions, to enable the two data centers in different regions to asynchronously replicate backup data. That the asynchronous replication link is established between the two data centers in different regions includes the following steps.
(1) A first asynchronous replication link 173 is established between the DC 11 and the DC 13, the DC 11 serves as a primary data center, and the DC 13 serves as a secondary data center. When the first asynchronous replication link 173 is in a normal state, the first asynchronous replication link 173 is in communication connection with the DC 11 and the DC 13, and is configured to send the backup data 112 generated by the DC 11 to the DC 13, so that the DC 13 stores the backup data 112, to keep the backup data 131 of the DC 13 consistent with the backup data 111 of the DC 11. Generally, after generating the backup data 112, the DC 11 sends the backup data 112 to the DC 12 in real time, and sends the backup data 112 to the DC 13 in a non-real-time manner. For example, the DC 11 sends the backup data 112 to the DC 13 only within an asynchronous replication periodicity.
(2) A second asynchronous replication link 174 is established between the DC 11 and the DC 14, the DC 11 serves as a primary data center, and the DC 14 serves as a secondary data center. When the second asynchronous replication link 174 is in a normal state, the second asynchronous replication link 174 is in communication connection with the DC 11 and the DC 14, and is configured to send the backup data 112 generated by the DC 11 to the DC 14, so that the DC 14 stores the backup data 112, to keep the backup data 141 of the DC 14 consistent with the backup data 111 of the DC 11. Generally, after generating the backup data 112, the DC 11 sends the backup data 112 to the DC 12 in real time, and sends the backup data 112 to the DC 14 in a non-real-time manner. For example, the DC 11 sends the backup data 112 to the DC 14 only within the asynchronous replication periodicity.
(3) A third asynchronous replication link 175 is established between the DC 12 and the DC 13, the DC 12 serves as a primary data center, and the DC 13 serves as a secondary data center. When the third asynchronous replication link 175 is in a normal state, the third asynchronous replication link 175 is in communication connection with the DC 12 and the DC 13, and is configured to send the backup data 122 generated by the DC 12 to the DC 13, so that the DC 13 stores the backup data 122, to keep the backup data 131 of the DC 13 consistent with the backup data 121 of the DC 12. Generally, after generating the backup data 122, the DC 12 sends the backup data 122 to the DC 11 in real time, and sends the backup data 122 to the DC 13 in a non-real-time manner. For example, the DC 12 sends the backup data 122 to the DC 13 only within the asynchronous replication periodicity.
(4) A fourth asynchronous replication link 176 is established between the DC 12 and the DC 14, the DC 12 serves as a primary data center, and the DC 14 serves as a secondary data center. When the fourth asynchronous replication link 176 is in a normal state, the fourth asynchronous replication link 176 is in communication connection with the DC 12 and the DC 14, and is configured to send the backup data 122 generated by the DC 12 to the DC 14, so that the DC 14 stores the backup data 122, to keep the backup data 141 of the DC 14 consistent with the backup data 121 of the DC 12. Generally, after generating the backup data 122, the DC 12 sends the backup data 122 to the DC 11 in real time, and sends the backup data 122 to the DC 14 in a non-real-time manner. For example, the DC 12 sends the backup data 122 to the DC 14 only within the asynchronous replication periodicity.

In conclusion, a synchronous replication link is established between two data centers in a same region, and an asynchronous replication link is established between two data centers in different regions, to achieve full-mesh networking among the four data centers in the disaster recovery system.

In some possible implementations, the backup data may be a snapshot, a log, a data file, or the like. The following uses a snapshot as an example of the backup data to describe an operating mechanism of the disaster recovery system with reference to the structure of the disaster recovery system.

The disaster recovery system includes four data centers: a data center A, a data center B, a data center C, and a data center D. The data center A and the data center B are in the first region 151, and the data center C and the data center D are in the second region 152. A normal operating mechanism of the disaster recovery system is that the data centers A, B, C, and D all operate normally. In this case, a first synchronous replication link between the data center A and the data center B, an asynchronous replication link between the data center A and the data center C, and a second synchronous replication link between the data center C and the data center D may operate normally, to keep snapshots of the four data centers consistent.

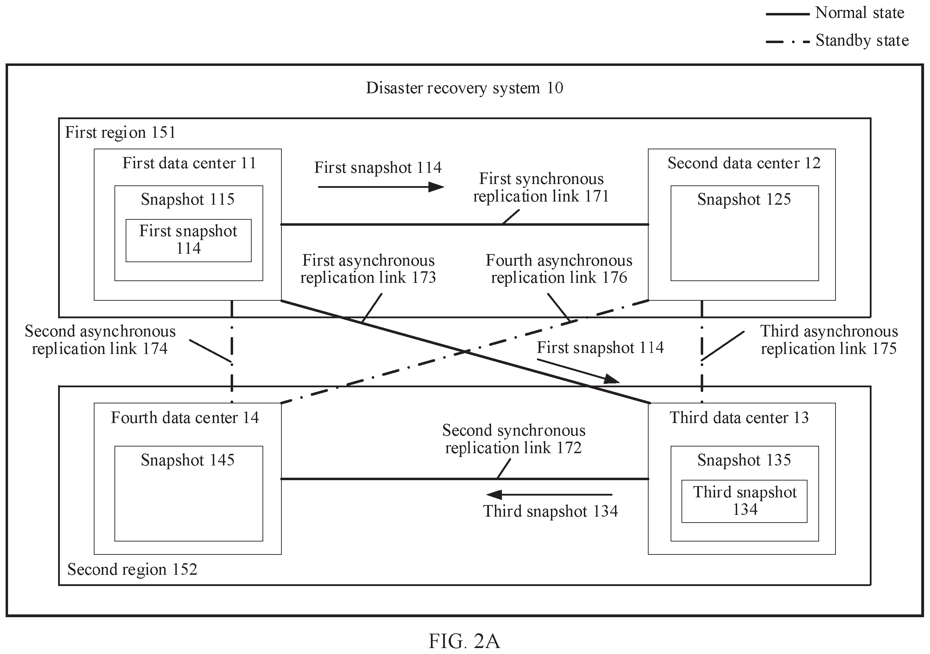

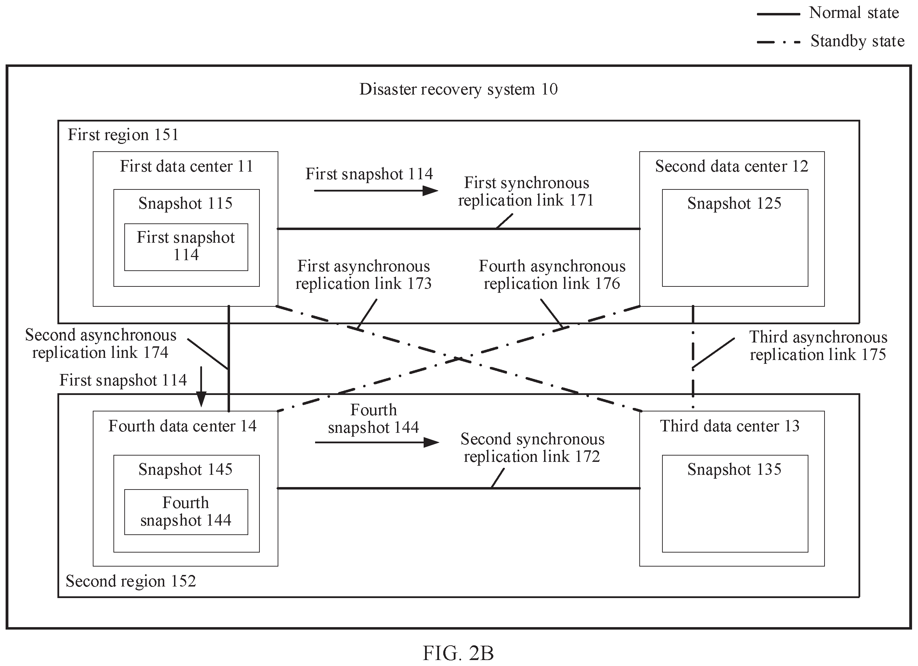

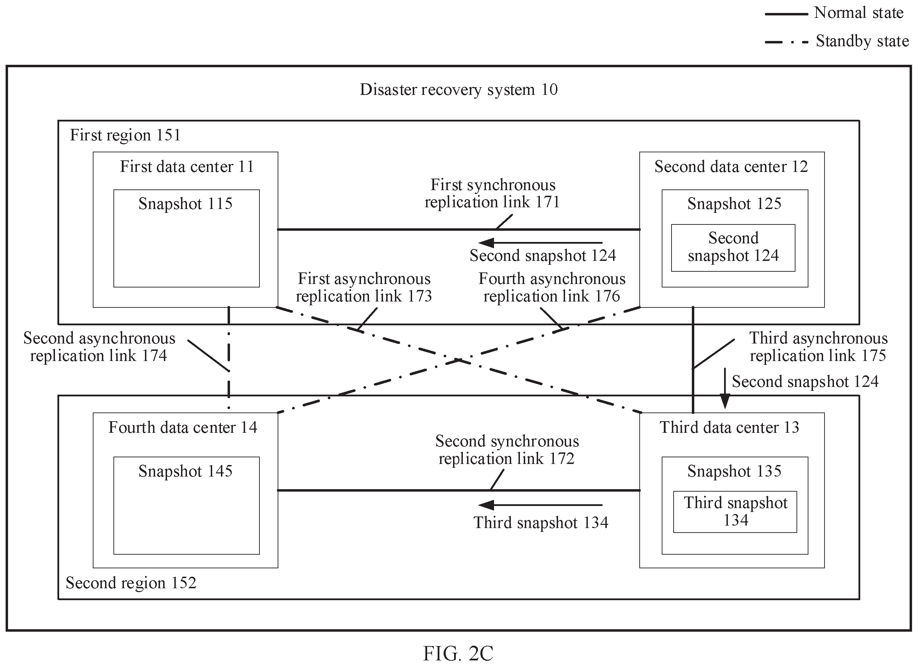

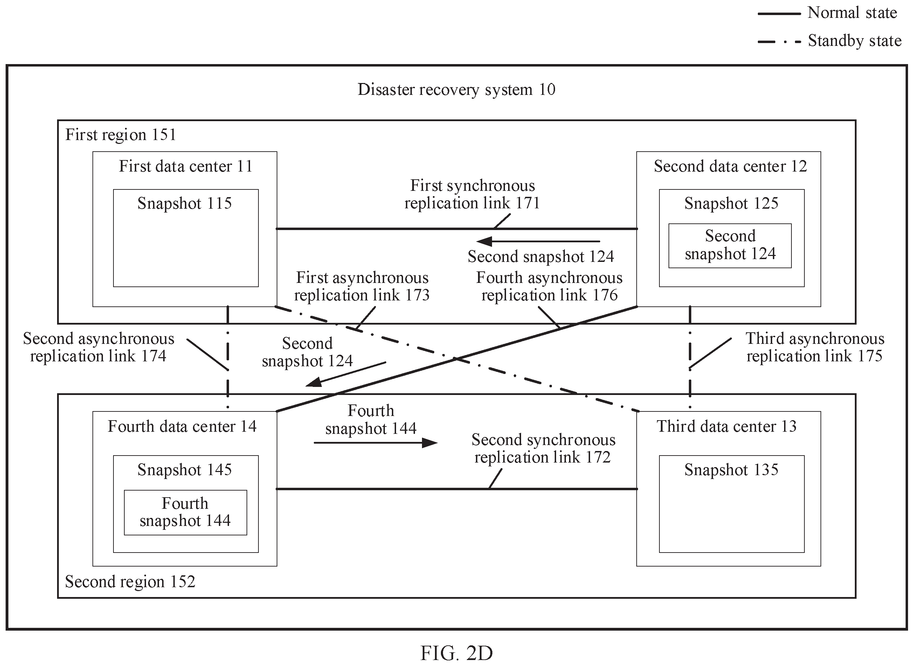

Refer to FIG. 2A to FIG. 2D. FIG. 2A is a diagram of a structure of a disaster recovery system in a normal operating mechanism according to this application. FIG. 2B, FIG. 2C, and FIG. 2D are respectively diagrams of structures of a disaster recovery system in other normal operating mechanisms according to this application.

In a disaster recovery system 10 shown in FIG. 2A, a data center A is a DC 11, a data center B is a DC 12, a data center C is a DC 13, and a data center D is a DC 14. Accordingly, a first synchronous replication link 171, a second synchronous replication link 172, and a first asynchronous replication link 173 may all be set to a normal state manually or by software, and a second asynchronous replication link 174, a third asynchronous replication link 175, and a fourth asynchronous replication link 176 may all be set to a standby state. The normal state indicates normal operation, and the standby state indicates that no operation is performed. Based on this, a normal operating mechanism of the disaster recovery system 10 is as follows.

First, the DC 11 performs a snapshot generation operation according to a first preset periodicity to generate a first snapshot 114, and sends the first snapshot 114 to the DC 12 through the first synchronous replication link 171, so that a snapshot 125 stored in the DC 12 and a snapshot 115 stored in the DC 11 are synchronized in real time to maintain consistency. The first preset periodicity is determined by a user, and may be one week, one day, one hour, or the like.

Then, the DC 11 sends the first snapshot 114 to the DC 13 through the first asynchronous replication link 173 within an asynchronous replication periodicity, so that a snapshot 135 stored in the DC 13 and the snapshot 115 stored in the DC 11 are periodically synchronized to maintain consistency. The asynchronous replication periodicity is determined by the user, and may be three weeks, three days, three hours, or the like.

Finally, after receiving, through the first asynchronous replication link 173, the first snapshot 114 sent by the DC 11, the DC 13 performs a snapshot generation operation to generate a third snapshot 134, and sends the third snapshot 134 to the DC 14 through the second synchronous replication link 172, so that a snapshot 145 stored in the DC 14 and the snapshot 135 stored in the DC 13 are synchronized in real time to maintain consistency. Alternatively, the DC 13 performs a snapshot generation operation according to a second preset periodicity to generate a third snapshot 134. The second preset periodicity is determined by the user, and may be one week, one day, one hour, or the like.

In some possible implementations, there may be one or more first snapshots 114. For example, when the first preset periodicity is from 0:00 to 24:00 of a day, and the asynchronous replication periodicity is from 12:00 to 22:00 of the day, the DC 11 performs a snapshot generation operation at 0:00 each day to generate one first snapshot 114, and sends the first snapshot 114 to the DC 13 at 12:00 through the first asynchronous replication link 173. When the first preset periodicity is from 0:00 to 24:00 of a day, and the asynchronous replication periodicity is from 12:00 of the day to 22:00 on a 3^{rd} day, the DC 11 performs a snapshot generation operation at 0:00 each day to generate a first snapshot 114, so that the DC 11 needs to transmit three first snapshots 114 in total within the asynchronous replication periodicity. The DC 11 may send, each time a first snapshot 114 is generated, the first snapshot 114 to the DC 13 through the first asynchronous replication link 173; or may send three first snapshots 114 together to the DC 13 through the first asynchronous replication link 173 after generating the three first snapshots 114; or may perform, after generating the three first snapshots 114, a snapshot generation operation on the three first snapshots 114 again to generate a new snapshot, and send the new snapshot to the DC 13 through the first asynchronous replication link 173. The DC 13 may perform, each time a first snapshot 114 is received, a snapshot generation operation to generate a third snapshot 134, and send the third snapshot 134 to the DC 14 through the second synchronous replication link 172; or may perform, after receiving the three first snapshots 114, a snapshot generation operation to generate a third snapshot 134, and send the third snapshot 134 to the DC 14 through the second synchronous replication link 172; or may perform, after receiving the new snapshot including the three first snapshots 114, a snapshot generation operation to generate a third snapshot 134, and send the third snapshot 134 to the DC 14 through the second synchronous replication link 172.

In conclusion, in the disaster recovery system 10 shown in FIG. 2A, snapshots of the four data centers can be synchronized.

It should be understood that the foregoing transmission of the first snapshot 114 between the DC 11 and the DC 12 is merely an example. This is not specifically limited herein. In the disaster recovery system 10 shown in FIG. 2A, the DC 12 may alternatively perform a snapshot generation operation according to the first preset periodicity to generate a second snapshot 124, and send the second snapshot 124 to the DC 11 through the first synchronous replication link 171.

In a disaster recovery system 10 shown in FIG. 2B, a data center A is a DC 11, a data center B is a DC 12, a data center C is a DC 14, and a data center D is a DC 13. Accordingly, a first synchronous replication link 171, a second synchronous replication link 172, and a second asynchronous replication link 174 may all be set to a normal state manually or by software, and a first asynchronous replication link 173, a third asynchronous replication link 175, and a fourth asynchronous replication link 176 may all be set to a standby state. Based on this, a normal operating mechanism of the disaster recovery system 10 is as follows.

First, the DC 11 performs a snapshot generation operation according to a first preset periodicity to generate a first snapshot 114, and sends the first snapshot 114 to the DC 12 through the first synchronous replication link 171, so that a snapshot 125 stored in the DC 12 and a snapshot 115 stored in the DC 11 are synchronized in real time to maintain consistency. In a specific implementation, when performing a snapshot generation operation for a 1^{st} time, the DC 11 generates a full snapshot, and uses the full snapshot as the first snapshot 114. When subsequently performing a snapshot generation operation, the DC 11 generates an incremental snapshot, and uses the incremental snapshot as the first snapshot 114.

Then, the DC 11 sends the first snapshot 114 to the DC 14 through the second asynchronous replication link 174 within an asynchronous replication periodicity, so that a snapshot 145 stored in the DC 14 and the snapshot 115 stored in the DC 11 are periodically synchronized to maintain consistency.

Finally, after receiving, through the second asynchronous replication link 174, the first snapshot 114 sent by the DC 11, the DC 14 performs a snapshot generation operation to generate a fourth snapshot 144, and sends the fourth snapshot 144 to the DC 13 through the second synchronous replication link 172, so that a snapshot 135 stored in the DC 13 and the snapshot 145 stored in the DC 14 are synchronized in real time to maintain consistency. Alternatively, the DC 14 performs a snapshot generation operation according to a second preset periodicity to generate a fourth snapshot 144.

In conclusion, in the disaster recovery system 10 shown in FIG. 2B, snapshots of the four data centers can be synchronized.

In a disaster recovery system 10 shown in FIG. 2C, a data center A is a DC 12, a data center B is a DC 11, a data center C is a DC 13, and a data center D is a DC 14. Accordingly, a first synchronous replication link 171, a second synchronous replication link 172, and a third asynchronous replication link 175 may all be set to a normal state manually or by software, and a first asynchronous replication link 173, a second asynchronous replication link 174, and a fourth asynchronous replication link 176 may all be set to a standby state. Based on this, a normal operating mechanism of the disaster recovery system 10 is similar to the normal operating mechanism of the disaster recovery system 10 in FIG. 2A. For brevity of the specification, details are not described herein again.

In a disaster recovery system 10 shown in FIG. 2D, a data center A is a DC 12, a data center B is a DC 11, a data center C is a DC 14, and a data center D is a DC 13. Accordingly, a first synchronous replication link 171, a second synchronous replication link 172, and a fourth asynchronous replication link 176 may all be set to a normal state manually or by software, and a first asynchronous replication link 173, a second asynchronous replication link 174, and a third asynchronous replication link 175 may all be set to a standby state. Based on this, a normal operating mechanism of the disaster recovery system 10 is similar to the normal operating mechanism of the disaster recovery system 10 in FIG. 2B. For brevity of the specification, details are not described herein again.

In conclusion, when all the four DCs operate normally, the disaster recovery system can select an asynchronous replication link for operation. Therefore, the disaster recovery system has high flexibility.

Based on the structure and the normal operating mechanism of the foregoing disaster recovery system, the following specifically describes a data synchronization method provided in this application. The data synchronization method may be applied to an entire asynchronous replication process, including asynchronous replication in a 1^{st} periodicity, asynchronous replication in a 2^{nd} periodicity, ..., and asynchronous replication in a k^{th} periodicity, where k is a positive integer, to keep backup data from two data centers in different regions consistent, so as to keep backup data of a plurality of data centers in the disaster recovery system consistent. The following uses the asynchronous replication in the k^{th} periodicity as an example to specifically describe a data synchronization method provided in this application.

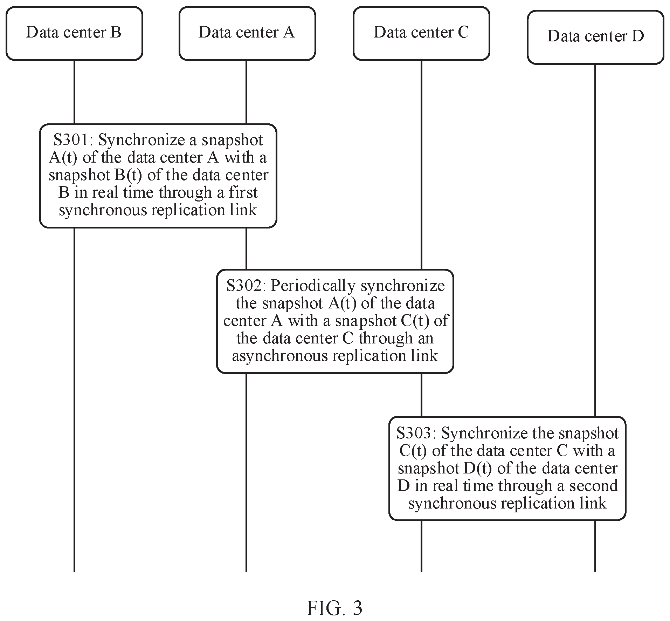

FIG. 3 is a schematic flowchart of a data synchronization method according to this application. As shown in FIG. 3, the data synchronization method provided in this application is applied to a disaster recovery system. The disaster recovery system includes a data center A, a data center B, a data center C, and a data center D. The data synchronization method includes the following steps.

S301: Synchronize a snapshot A(t) of the data center A with a snapshot B(t) of the data center B in real time through a first synchronous replication link.

The first synchronous replication link may be the first synchronous replication link 171 in the disaster recovery system 10 in FIG. 1. The data center A and the data center B are in a first region. The data center A may be the DC 11 or the DC 12 in the disaster recovery system 10 in FIG. 1. When the data center A is the DC 11 in the disaster recovery system 10 in FIG. 1, the data center B is the DC 12 in the disaster recovery system 10 in FIG. 1. When the data center A is the DC 12 in the disaster recovery system 10 in FIG. 1, the data center B is the DC 11 in the disaster recovery system 10 in FIG. 1. The first region may be the first region 151 in the disaster recovery system 10 in FIG. 1.

In some possible implementations, a snapshot includes metadata and data. The metadata represents attributes of the snapshot, including a name of the snapshot, generation time of the snapshot, a name of a storage server, a file name, a file modification time, and the like. The data is data in the storage server when a snapshot generation operation is performed. The snapshot A(t) is used as an example. The snapshot A(t) includes metadata A(t) and data A(t). The metadata A(t) represents attributes of the snapshot A(t), including a name of the snapshot A(t), generation time t of the snapshot A(t), a name of a storage server A, a file name, a file modification time, and the like. The data A(t) is data A(t) in the storage server A when a snapshot generation operation is performed.

In a specific implementation, the snapshot further includes a global identifier, and a data center that generates the snapshot is identified by using the global identifier. The snapshot A(t) is used as an example. A specific process of setting a global identifier t in the snapshot A(t) is as follows. First, the data center A may obtain an identifier of the snapshot A(t). In a specific implementation, the data center A sorts all snapshots A based on generation time of the snapshots A, to obtain a sequence number of the snapshot A(t), and uses the sequence number as the identifier of the snapshot A(t). It should be understood that the identifier of the snapshot A(t) may also be a name, generation time, or the like of the snapshot A(t). Then, because the data center A is deployed on one or more storage servers A, the data center A may obtain an identifier of the storage server A. The identifier of the storage server A may be a world wide name (world wide name, WWN), a universally unique identifier (universally unique identifier, UUID), a device unique identifier (device unique identifier, DUID), or the like. Particularly, when there are a plurality of storage servers A, the data center A obtains an identifier of a storage server A that generates the snapshot A(t). Then, the data center A uses the identifier of the snapshot A(t) and the identifier of the storage server A to form the global identifier t, and adds the global identifier t to the metadata A(t) of the snapshot A(t), to obtain the snapshot A(t) including the global identifier t. In this solution, a plurality of snapshots generated by a same storage server may be identified by using identifiers of the snapshots, and a plurality of snapshots generated by different storage servers may be identified by using identifiers of the storage servers. Therefore, if global identifiers each include an identifier of a snapshot and an identifier of a storage server, all snapshots generated by all data centers can be uniquely identified by using the global identifiers, and all data centers can further store snapshots including a same global identifier, to ensure consistency of the snapshots of all the data centers.

In some possible implementations, synchronizing the snapshot A(t) of the data center A with the snapshot B(t) of the data center B in real time through the first synchronous replication link includes at least the following two manners: (1) The data center B receives, through the first synchronous replication link, the snapshot A(t) generated by the data center A, and uses the snapshot A(t) as the snapshot B(t). Specifically, after generating the snapshot A(t) including the global identifier t, the data center A sends the snapshot A(t) to the data center B through the first synchronous replication link. After the data center B receives, through the first synchronous replication link, the snapshot A(t) sent by the data center A, a storage server B performs a write operation on the metadata A(t) and the data A(t) in the snapshot A(t), to write the metadata A(t) and the data A(t) into the storage server B. After the write operation is complete, the data center B obtains the snapshot B(t). (2) The data center A receives, through the first synchronous replication link, the snapshot B(t) generated by the data center B, and uses the snapshot B(t) as the snapshot A(t). For a specific process, refer to a specific process in which the data center B receives, through the first synchronous replication link, the snapshot A(t) generated by the data center A and uses the snapshot A(t) as the snapshot B(t) in the foregoing manner (1). For brevity of the specification, details are not described herein again.

S302: Periodically synchronize the snapshot A(t) of the data center A with a snapshot C(t) of the data center C through an asynchronous replication link.

In some possible implementations, when the data center A is the DC 11 and the data center C is a DC 13, the asynchronous replication link may be the first asynchronous replication link 173 in the disaster recovery system 10 in FIG. 1. When the data center A is the DC 11 and the data center C is a DC 14, the asynchronous replication link may be the second asynchronous replication link 174 in the disaster recovery system 10 in FIG. 1. When the data center A is the DC 12 and the data center C is the DC 13, the asynchronous replication link may be the third asynchronous replication link 175 in the disaster recovery system 10 in FIG. 1. When the data center A is the DC 12 and the data center C is the DC 14, the asynchronous replication link may be the fourth asynchronous replication link 176 in the disaster recovery system 10 in FIG. 1.

In some possible implementations, the data center A sends the snapshot A(t) to the data center C through the asynchronous replication link within an asynchronous replication periodicity. After the data center C receives, through the asynchronous replication link, the snapshot A(t) sent by the data center A, a storage server C performs a write operation on the metadata A(t) and the data A(t) in the snapshot A(t). After the write operation is completed, the storage server C performs a snapshot generation operation to generate the snapshot C(t).

S303: Synchronize the snapshot C(t) of the data center C with a snapshot D(t) of the data center D in real time through a second synchronous replication link.

The second synchronous replication link may be the second synchronous replication link 172 in the disaster recovery system 10 in FIG. 1. The data center C and the data center D are in a second region different from the first region. The data center C may be the DC 13 or the DC 14 in the disaster recovery system 10 in FIG. 1. When the data center C is the DC 13 in the disaster recovery system 10 in FIG. 1, the data center D is the DC 14 in the disaster recovery system 10 in FIG. 1. When the data center C is the DC 14 in the disaster recovery system 10 in FIG. 1, the data center D is the DC 13 in the disaster recovery system 10 in FIG. 1. The second region may be the second region 152 in the disaster recovery system 10 in FIG. 1.

In some possible implementations, after the data center D receives, through the second synchronous replication link, the snapshot C(t) sent by the data center C, a storage server D performs a write operation on metadata C(t) and data C(t) in the snapshot C(t). After the write operation is complete, the data center D obtains the snapshot D(t).

In conclusion, in the data synchronization method provided in this application, full-mesh networking among four data centers is implemented in the disaster recovery system, two data centers in a same region replicate snapshots synchronously, and two data centers in different regions replicate snapshots asynchronously. Based on this, two data centers in different regions are used as driving centers, so that, within the asynchronous replication periodicity, the two data centers generate snapshots including same data, to ensure consistency of snapshots of the two data centers. In addition, based on synchronous replication between two data centers in a same region, snapshots of the other two data centers are also consistent. Therefore, any two data centers have consistent snapshots.

However, when the disaster recovery system 10 is faulty, the disaster recovery system 10 may adjust an operating mechanism of the disaster recovery system 10 based on a type and a quantity of faulty data centers, a structure of the disaster recovery system 10, and a data synchronization method, to achieve stepwise degradation of disaster recovery performance of the disaster recovery system 10.

The following describes operating mechanisms of the disaster recovery system 10 in 11 different fault cases in this application.
(1) The data center A is faulty.

It is assumed that a disaster-level fault suddenly occurs in the data center A and the data center A becomes completely unavailable, while the data center B, the data center C, and the data center D all operate normally. In this case, because the data center A and the data center B in the first region are active-active data centers, a client 16a that is handling a service on the data center A can be seamlessly switched to the data center B via a LUN, to continue handling the service without affecting a client 16b that is originally handling a service on the data center B.

After the data center A is faulty, the disaster recovery system 10 includes at least the following two operating mechanisms:
(a) Asynchronous replication of snapshots is implemented through an asynchronous replication link between the data center B and the data center C; and
(b) Asynchronous replication of snapshots is implemented through an asynchronous replication link between the data center B and the data center D.

It may be learned that both the asynchronous replication link between the data center B and the data center C and the asynchronous replication link between the data center B and the data center D are backup asynchronous replication links.

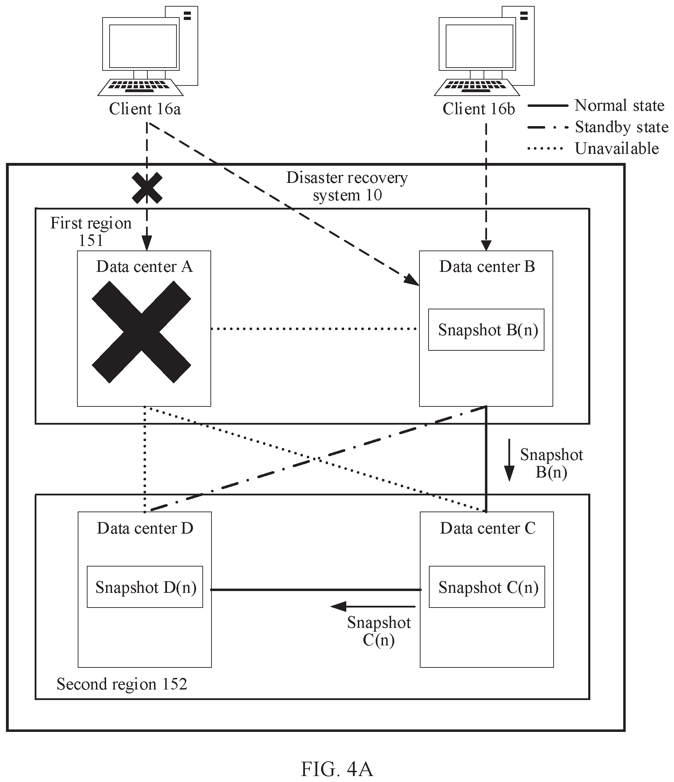

FIG. 4A is a diagram of an operating mechanism of a disaster recovery system in which the data center A is faulty according to this application. As shown in FIG. 4A, for the foregoing case (a), the asynchronous replication link between the data center B and the data center C is set to a normal state manually or by software, so that the asynchronous replication link operates normally. After the asynchronous replication link can operate normally, the data center B sends a snapshot B(n) to the data center C through the asynchronous replication link within the asynchronous replication periodicity. After the data center C receives, through the asynchronous replication link, the snapshot B(n) sent by the data center B, the storage server C performs a write operation on metadata B(n) and data B(n) in the snapshot B(n). After the write operation is completed, the storage server C performs a snapshot generation operation to generate a snapshot C(n), so that the snapshot C(n) of the data center C and the snapshot B(n) of the data center B are periodically synchronized to maintain consistency. Then, the data center C sends the snapshot C(n) to the data center D through the second synchronous replication link. After the data center D receives, through the second synchronous replication link, the snapshot C(n) sent by the data center C, the storage server D performs a write operation on the metadata C(n) and the data C(n) in the snapshot C(n). After the write operation is completed, the data center D obtains a snapshot D(n), so that the snapshot D(n) of the data center D and the snapshot C(n) of the data center C are synchronized in real time to maintain consistency.

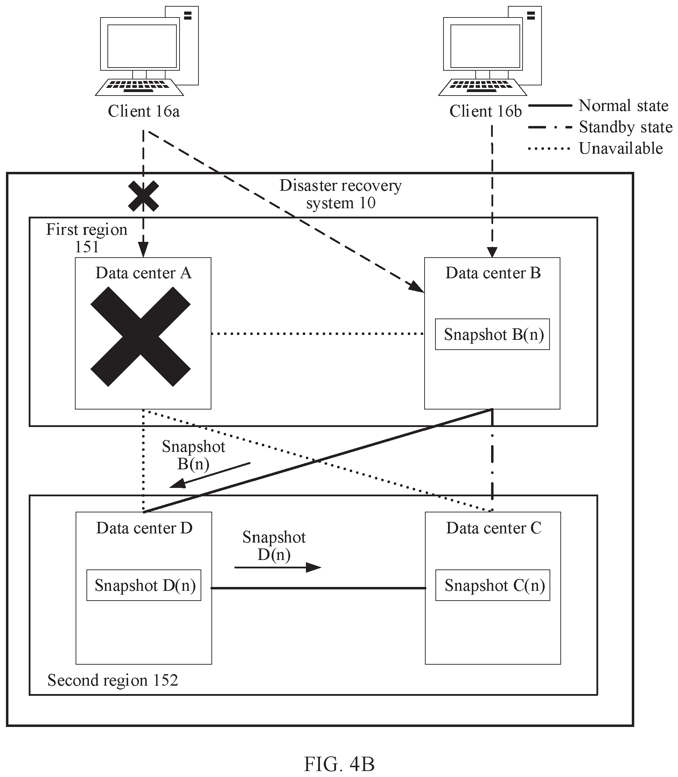

FIG. 4B is a diagram of another operating mechanism of a disaster recovery system in which the data center A is faulty according to this application. As shown in FIG. 4B, for the foregoing case (b), the asynchronous replication link between the data center B and the data center D is set to a normal state manually or by software, so that the asynchronous replication link operates normally. After the asynchronous replication link can operate normally, the data center B sends the snapshot B(n) to the data center D through the asynchronous replication link within the asynchronous replication periodicity. After the data center D receives, through the asynchronous replication link, the snapshot B(n) sent by the data center B, the storage server D performs a write operation on the metadata B(n) and the data B(n) in the snapshot B(n). After the write operation is completed, the storage server D performs a snapshot generation operation to generate the snapshot D(n), so that the snapshot D(n) of the data center D and the snapshot B(n) of the data center B are periodically synchronized to maintain consistency. Then, the data center D sends the snapshot D(n) to the data center C through the second synchronous replication link. After the data center C receives, through the second synchronous replication link, the snapshot D(n) sent by the data center D, the storage server C performs a write operation on metadata D(n) and data D(n) in the snapshot D(n). After the write operation is completed, the data center C obtains the snapshot C(n), so that the snapshot C(n) of the data center C and the snapshot D(n) of the data center D are synchronized in real time to maintain consistency.

(2) The data center B is faulty.

It is assumed that a disaster-level fault suddenly occurs in the data center B, while the data center A, the data center C, and the data center D all operate normally. In this case, because the data center A and the data center B in the first region are active-active data centers, the client 16b that is handling a service on the data center B can be seamlessly switched to the data center A via the LUN, to continue handling the service without affecting the client 16a that is originally handling a service on the data center A.

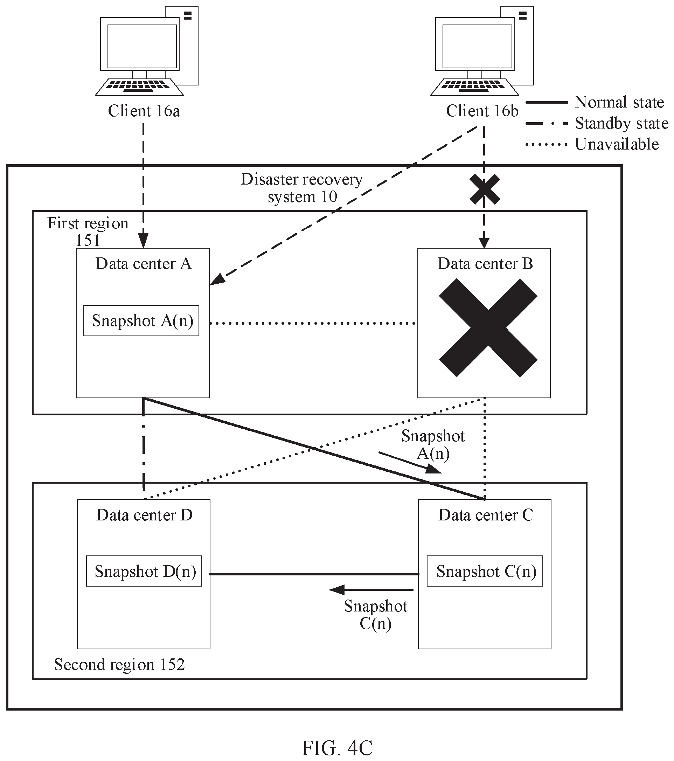

FIG. 4C is a diagram of an operating mechanism of a disaster recovery system in which the data center B is faulty according to this application. As shown in FIG. 4C, after the data center B is faulty, because the asynchronous replication link between the data center A and the data center C still operates normally, the snapshot A(n) of the data center A and the snapshot C(n) of the data center C can be periodically synchronized to maintain consistency. In addition, based on synchronous replication between the data center C and the data center D, the snapshot C(n) of the data center C and the snapshot D(n) of the data center D can be synchronized in real time to maintain consistency.

(3) The data center C is faulty.

It is assumed that a disaster-level fault suddenly occurs in the data center C, while the data center A, the data center B, and the data center D all operate normally. In this case, neither the client 16a that is handling a service on the data center A nor the client 16b that is handling a service on the data center B is affected. In addition, because the first synchronous replication link between the data center A and the data center B still operates normally, the snapshot A(n) of the data center A and the snapshot B(n) of the data center B can be synchronized in real time to maintain consistency.

After the data center C is faulty, the disaster recovery system 10 includes at least the following two operating mechanisms:
(a) Asynchronous replication of snapshots is implemented through an asynchronous replication link between the data center A and the data center D; and
(b) Asynchronous replication of snapshots is implemented through the asynchronous replication link between the data center B and the data center D.

It may be learned that the asynchronous replication link between the data center A and the data center D and the asynchronous replication link between the data center B and the data center D are backup asynchronous replication links.

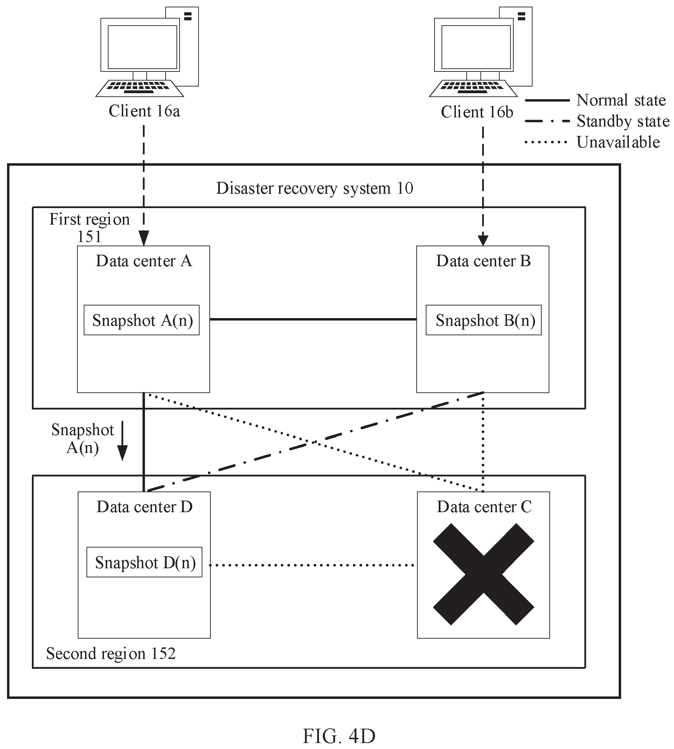

FIG. 4D is a diagram of an operating mechanism of a disaster recovery system in which the data center C is faulty according to this application. As shown in FIG. 4D, for the foregoing case (a), the asynchronous replication link between the data center A and the data center D is set to a normal state manually or by software, so that the asynchronous replication link operates normally. After the asynchronous replication link can operate normally, the data center A sends the snapshot A(n) to the data center D through the asynchronous replication link within the asynchronous replication periodicity. After the data center D receives, through the asynchronous replication link, the snapshot A(n) sent by the data center A, the storage server D performs a write operation on the metadata A(n) and the data A(n) in the snapshot A(n). After the write operation is completed, the storage server D performs a snapshot generation operation to generate the snapshot D(n), so that the snapshot D(n) of the data center D and the snapshot A(n) of the data center A are periodically synchronized to maintain consistency.

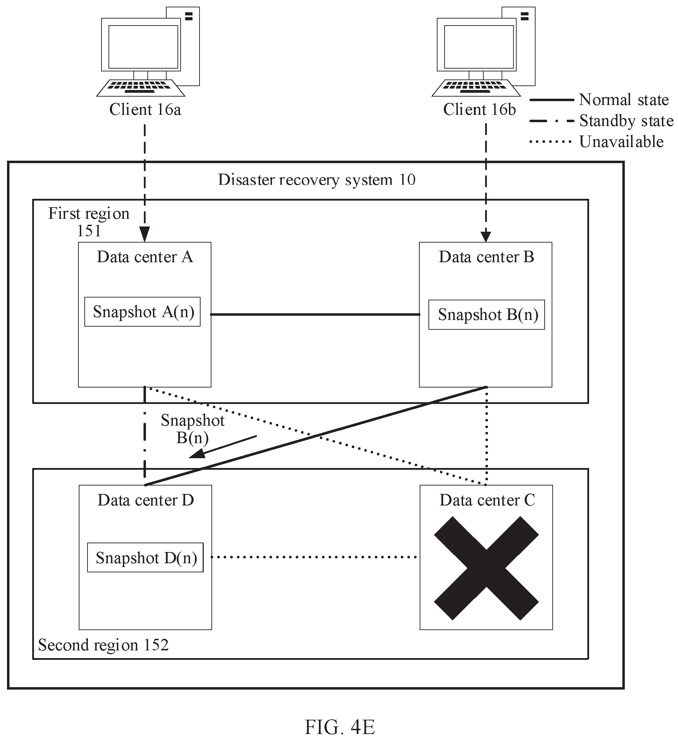

FIG. 4E is a diagram of another operating mechanism of a disaster recovery system in which the data center C is faulty according to this application. As shown in FIG. 4E, for the foregoing case (b), the asynchronous replication link between the data center B and the data center D is set to a normal state manually or by software, so that the asynchronous replication link operates normally. After the asynchronous replication link can operate normally, the data center B sends the snapshot B(n) to the data center D through the asynchronous replication link within the asynchronous replication periodicity. After the data center D receives, through the asynchronous replication link, the snapshot B(n) sent by the data center B, the storage server D performs a write operation on the metadata B(n) and the data B(n) in the snapshot B(n). After the write operation is completed, the storage server D performs a snapshot generation operation to generate the snapshot D(n), so that the snapshot D(n) of the data center D and the snapshot B(n) of the data center B are periodically synchronized to maintain consistency.

(4) The data center D is faulty.

It is assumed that a disaster-level fault suddenly occurs in the data center D, while the data center A, the data center B, and the data center C all operate normally. In this case, neither the client 16a that is handling a service on the data center A nor the client 16b that is handling a service on the data center B is affected. In addition, because the first synchronous replication link between the data center A and the data center B still operates normally, the snapshot A(n) of the data center A and the snapshot B(n) of the data center B can be synchronized in real time to maintain consistency.

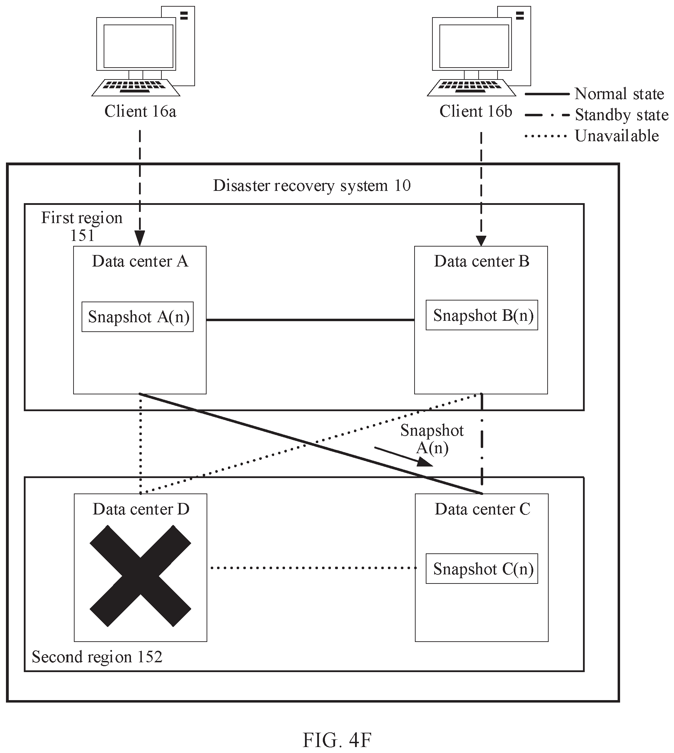

FIG. 4F is a diagram of an operating mechanism of a disaster recovery system in which the data center D is faulty according to this application. As shown in FIG. 4F, after the data center D is faulty, because the asynchronous replication link between the data center A and the data center C still operates normally, the snapshot A(n) of the data center A and the snapshot C(n) of the data center C can be periodically synchronized to maintain consistency.

In conclusion, after any data center is suddenly faulty, because there is a disaster recovery protection relationship between any two of three remaining data centers in the disaster recovery system 10, and snapshot synchronization among the three data centers can be achieved, a disaster recovery scale of the disaster recovery system 10 decreases from four data centers to three data centers, and disaster recovery performance degrades in a stepwise manner, so that user requirements can be met to a greatest extent.

(5) The data centers A and B are faulty.

It is assumed that disaster-level faults occur in the data centers A and B, while the data centers C and D operate normally. In this case, the client 16a that is handling a service on the data center A is forced to be interrupted, and the client 16b that is handling a service on the data center B is also forced to be interrupted.

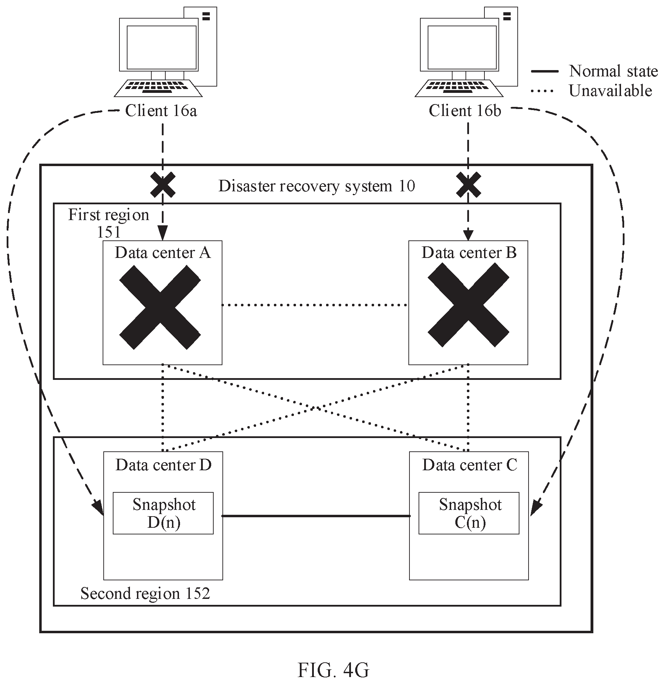

FIG. 4G is a diagram of an operating mechanism of a disaster recovery system in which the data centers A and B are faulty according to this application. As shown in FIG. 4G, after the data centers A and B are faulty, services of the data centers A and B are manually switched to the data centers C and D. The data centers C and D form active-active data centers and provide a same LUN and a same service externally, to enable the clients 16a and 16b to access the data center C or the data center D via the LUN to re-handle user services on the data center C or the data center D. In addition, the snapshot C(n) of the data center C and the snapshot D(n) of the data center D can be synchronized in real time to maintain consistency.

(6) The data centers A and C are faulty.

It is assumed that disaster-level faults occur in the data centers A and C, while the data centers B and D operate normally. In this case, because the data center A and the data center B in the first region are active-active data centers, the client 16a that is handling a service on the data center A can be seamlessly switched to the data center B via the LUN, to continue handling the service without affecting the client 16b that is originally handling a service on the data center B.

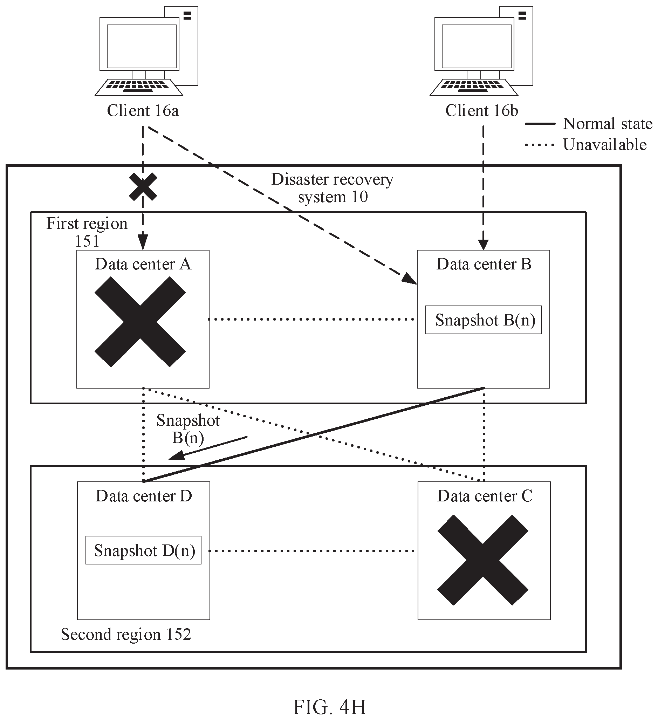

FIG. 4H is a diagram of an operating mechanism of a disaster recovery system in which the data centers A and C are faulty according to this application. As shown in FIG. 4H, after the data centers A and C are faulty, the asynchronous replication link between the data center B and the data center D is set to a normal state manually or by software, so that the asynchronous replication link operates normally. After the asynchronous replication link can operate normally, the data center B sends the snapshot B(n) to the data center D through the asynchronous replication link within the asynchronous replication periodicity. After the data center D receives, through the asynchronous replication link, the snapshot B(n) sent by the data center B, the storage server D performs a write operation on the metadata B(n) and the data B(n) in the snapshot B(n). After the write operation is completed, the storage server D performs a snapshot generation operation to generate the snapshot D(n), so that the snapshot D(n) of the data center D and the snapshot B(n) of the data center B are periodically synchronized to maintain consistency.

It may be learned that the asynchronous replication link between the data center B and the data center D is a backup asynchronous replication link.

(7) The data centers A and D are faulty.

It is assumed that disaster-level faults occur in the data centers A and D, while the data centers B and D operate normally. In this case, because the data center A and the data center B in the first region are active-active data centers, the client 16a that is handling a service on the data center A can be seamlessly switched to the data center B via the LUN, to continue handling the service without affecting the client 16b that is originally handling a service on the data center B.

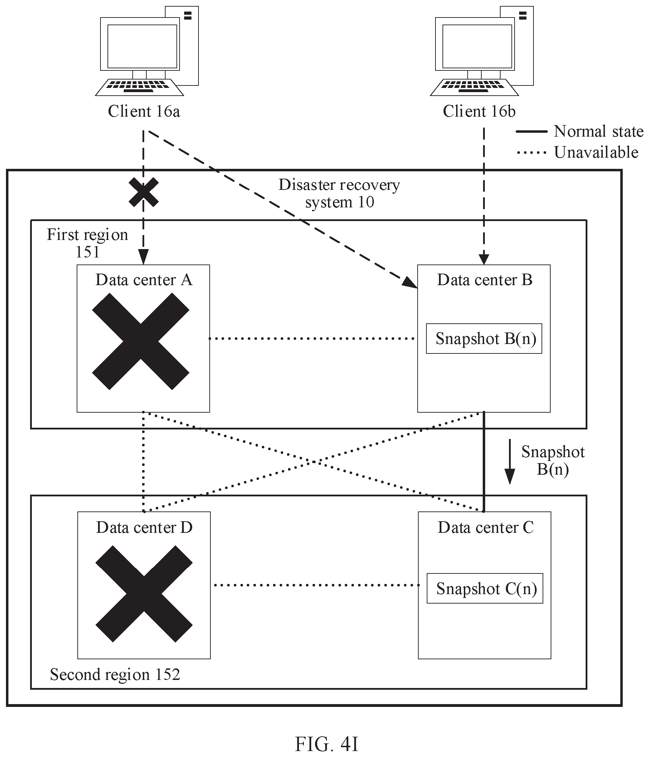

FIG. 4I is a diagram of an operating mechanism of a disaster recovery system in which the data centers A and D are faulty according to this application. As shown in FIG. 4I, after the data centers A and D are faulty, the asynchronous replication link between the data center B and the data center C is set to a normal state manually or by software, so that the asynchronous replication link operates normally. After the asynchronous replication link can operate normally, the data center B sends the snapshot B(n) to the data center C through the asynchronous replication link within the asynchronous replication periodicity. After the data center C receives, through the asynchronous replication link, the snapshot B(n) sent by the data center B, the storage server C performs a write operation on the metadata B(n) and the data B(n) in the snapshot B(n). After the write operation is completed, the storage server C performs a snapshot generation operation to generate the snapshot C(n), so that the snapshot C(n) of the data center C and the snapshot B(n) of the data center B are periodically synchronized to maintain consistency.

It may be learned that the asynchronous replication link between the data center B and the data center C is a backup asynchronous replication link.

(8) The data centers B and C are faulty.

It is assumed that disaster-level faults occur in the data centers B and C, while the data centers A and D operate normally. In this case, because the data center A and the data center B in the first region are active-active data centers, the client 16b that is handling a service on the data center B can be seamlessly switched to the data center A via the LUN, to continue handling the service without affecting the client 16a that is originally handling a service on the data center A.

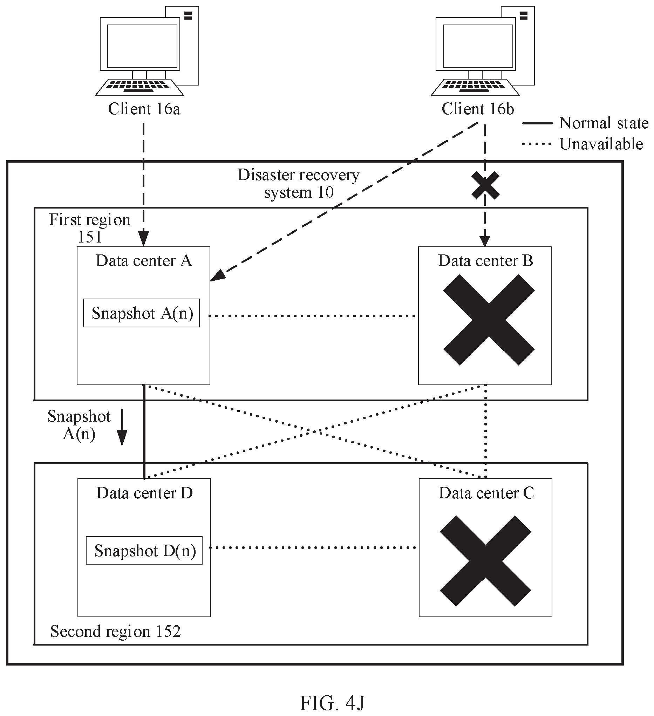

FIG. 4J is a diagram of an operating mechanism of a disaster recovery system in which the data centers B and C are faulty according to this application. As shown in FIG. 4J, after the data centers B and C are faulty, the asynchronous replication link between the data center A and the data center D is set to a normal state manually or by software, so that the asynchronous replication link operates normally. After the asynchronous replication link can operate normally, the data center A sends the snapshot A(n) to the data center D through the asynchronous replication link within the asynchronous replication periodicity. After the data center D receives, through the asynchronous replication link, the snapshot A(n) sent by the data center A, the storage server D performs a write operation on the metadata A(n) and the data A(n) in the snapshot A(n). After the write operation is completed, the storage server D performs a snapshot generation operation to generate the snapshot D(n), so that the snapshot D(n) of the data center D and the snapshot A(n) of the data center A are periodically synchronized to maintain consistency.

It may be learned that the asynchronous replication link between the data center A and the data center D is a backup asynchronous replication link.

(9) The data centers B and D are faulty.

It is assumed that disaster-level faults occur in the data centers B and D, while the data centers A and C operate normally. In this case, because the data center A and the data center B in the first region are active-active data centers, the client 16b that is handling a service on the data center B can be seamlessly switched to the data center A via the LUN, to continue handling the service without affecting the client 16a that is originally handling a service on the data center A.

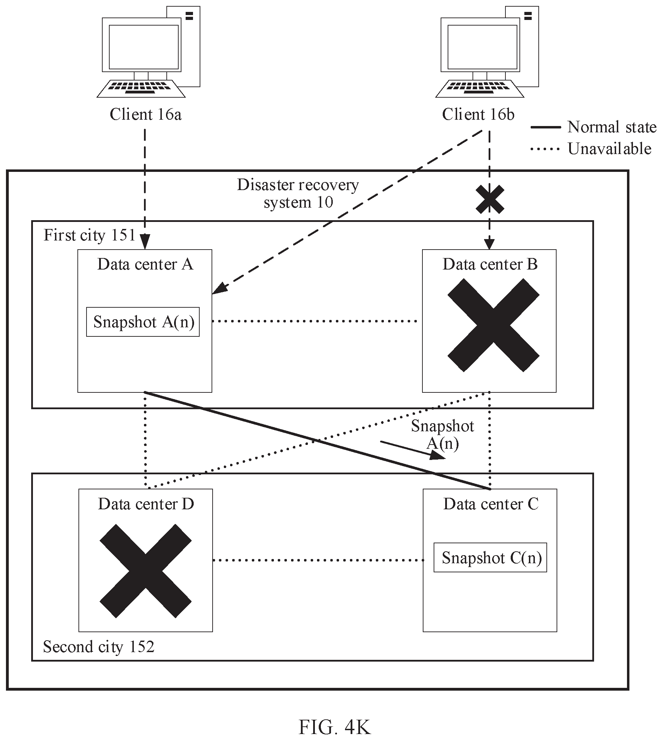

FIG. 4K is a diagram of an operating mechanism of a disaster recovery system in which the data centers B and D are faulty according to this application. As shown in FIG. 4K, after the data centers B and D are faulty, because the asynchronous replication link between the data center A and the data center C still operates normally, the snapshot A(n) of the data center A and the snapshot C(n) of the data center C can be periodically synchronized to maintain consistency.

(10) The data centers C and D are faulty.

It is assumed that disaster-level faults occur in the data centers C and D, while the data centers A and B operate normally. In this case, neither the client 16a that is handling a service on the data center A nor the client 16b that is handling a service on the data center B is affected.

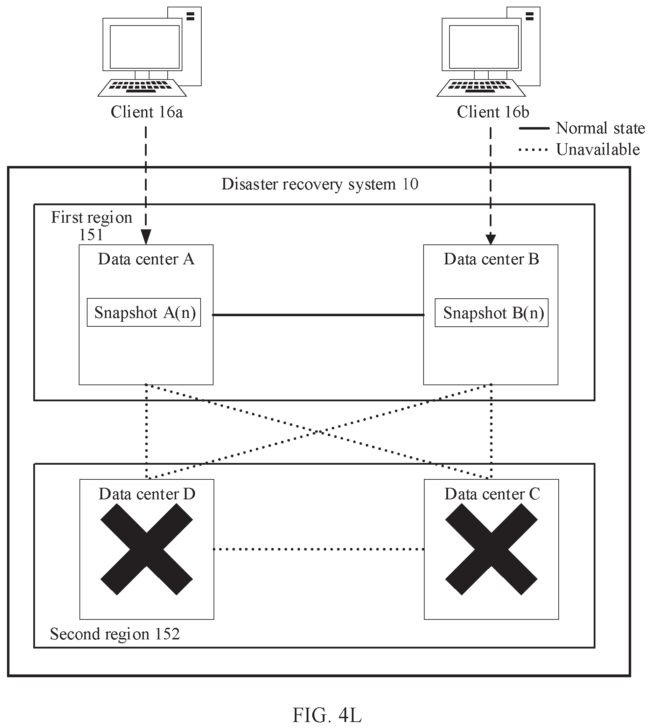

FIG. 4L is a diagram of an operating mechanism of a disaster recovery system in which the data centers C and D are faulty according to this application. As shown in FIG. 4L, after the data centers C and D are faulty, because the first synchronous replication link between the data center A and the data center B still operates normally, the snapshot A(n) of the data center A and the snapshot B(n) of the data center B can be synchronized in real time to maintain consistency.

In conclusion, after any two data centers are suddenly faulty, because there is still a disaster recovery protection relationship between two remaining data centers in the disaster recovery system 10, and snapshot synchronization between the two data centers can be achieved, the disaster recovery scale of the disaster recovery system 10 decreases from four data centers to two data centers, and the disaster recovery performance degrades in a stepwise manner, so that user requirements can be met to a greatest extent.

(11) The asynchronous replication link between the data center A and the data center C is faulty.

It is assumed that the asynchronous replication link between the data center A and the data center C is faulty, while the data centers A, B, C, and D all operate normally. In this case, neither the client 16a that is handling a service on the data center A nor the client 16b that is handling a service on the data center B is affected. In addition, because the first synchronous replication link between the data center A and the data center B still operates normally, the snapshot A(n) of the data center A and the snapshot B(n) of the data center B can be synchronized in real time to maintain consistency.

After the asynchronous replication link between the data center A and the data center C is faulty, the disaster recovery system 10 includes at least the following three operating mechanisms:
(a) Asynchronous replication of snapshots is implemented through an asynchronous replication link between the data center A and the data center D;
(b) Asynchronous replication of snapshots is implemented through an asynchronous replication link between the data center B and the data center C; and
(c) Asynchronous replication of snapshots is implemented through an asynchronous replication link between the data center B and the data center D.

It may be learned that the asynchronous replication link between the data center A and the data center D, the asynchronous replication link between the data center B and the data center C, and the asynchronous replication link between the data center B and the data center D are all backup asynchronous replication links.

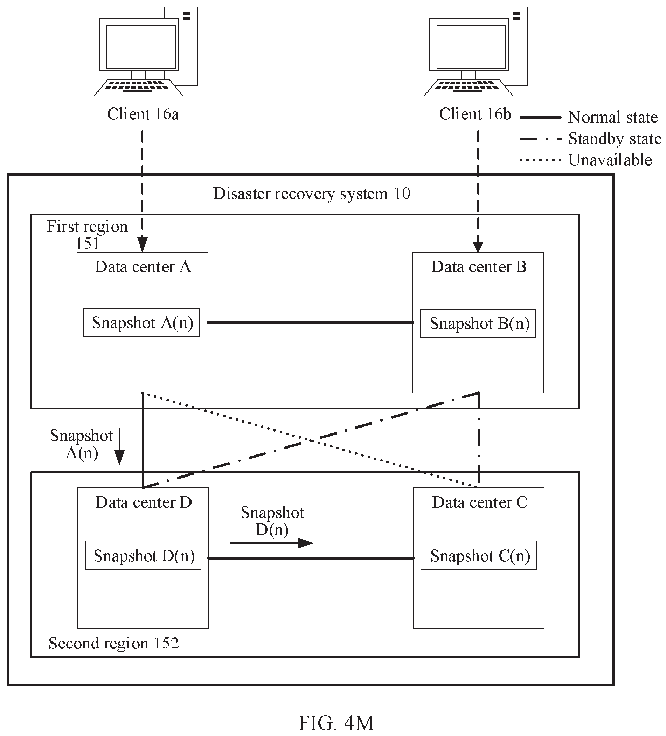

FIG. 4M is a diagram of an operating mechanism of a disaster recovery system in which an asynchronous replication link between the data centers A and C is faulty according to this application. As shown in FIG. 4M, for the foregoing case (a), the asynchronous replication link between the data center A and the data center D is set to a normal state manually or by software, so that the asynchronous replication link operates normally. After the asynchronous replication link can operate normally, the data center A sends the snapshot A(n) to the data center D through the asynchronous replication link within the asynchronous replication periodicity. After the data center D receives, through the asynchronous replication link, the snapshot A(n) sent by the data center A, the storage server D performs a write operation on the metadata A(n) and the data A(n) in the snapshot A(n). After the write operation is completed, the storage server D performs a snapshot generation operation to generate the snapshot D(n), so that the snapshot D(n) of the data center D and the snapshot A(n) of the data center A are periodically synchronized to maintain consistency. Then, the data center D sends the snapshot D(n) to the data center C through the second synchronous replication link. After the data center C receives, through the second synchronous replication link, the snapshot D(n) sent by the data center D, the storage server C performs a write operation on the metadata D(n) and the data D(n) in the snapshot D(n). After the write operation is completed, the data center C obtains the snapshot C(n), so that the snapshot C(n) of the data center C and the snapshot D(n) of the data center D are synchronized in real time to maintain consistency.

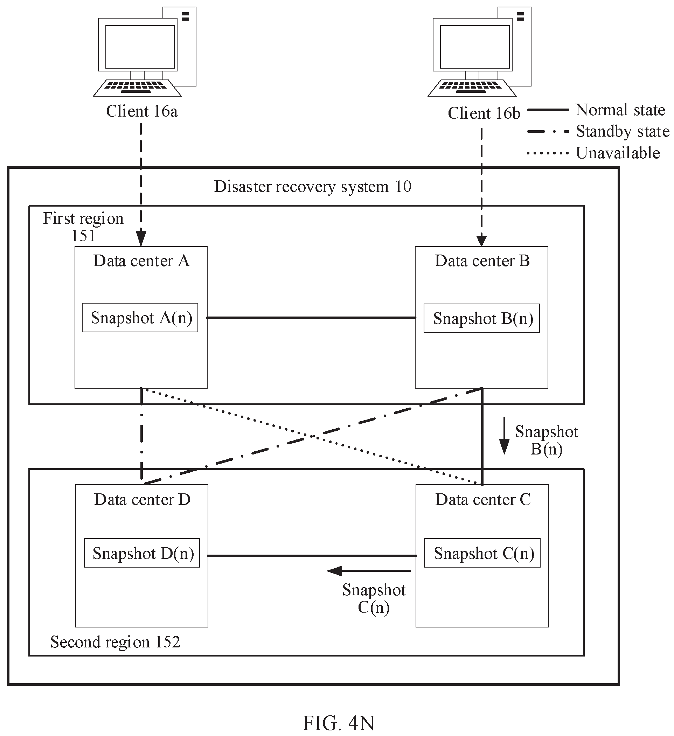

FIG. 4N is a diagram of another operating mechanism of a disaster recovery system in which an asynchronous replication link between the data centers A and C is faulty according to this application. As shown in FIG. 4N, for the foregoing case (b), the asynchronous replication link between the data center B and the data center C is set to a normal state manually or by software, so that the asynchronous replication link operates normally. After the asynchronous replication link can operate normally, the data center B sends the snapshot B(n) to the data center C through the asynchronous replication link within the asynchronous replication periodicity. After the data center C receives, through the asynchronous replication link, the snapshot B(n) sent by the data center B, the storage server C performs a write operation on the metadata B(n) and the data B(n) in the snapshot B(n). After the write operation is completed, the storage server C performs a snapshot generation operation to generate the snapshot C(n), so that the snapshot C(n) of the data center C and the snapshot B(n) of the data center B are periodically synchronized to maintain consistency. Then, the data center C sends the snapshot C(n) to the data center D through the second synchronous replication link. After the data center D receives, through the second synchronous replication link, the snapshot C(n) sent by the data center C, the storage server D performs a write operation on the metadata C(n) and the data C(n) in the snapshot C(n). After the write operation is completed, the data center D obtains a snapshot D(n), so that the snapshot D(n) of the data center D and the snapshot C(n) of the data center C are synchronized in real time to maintain consistency.

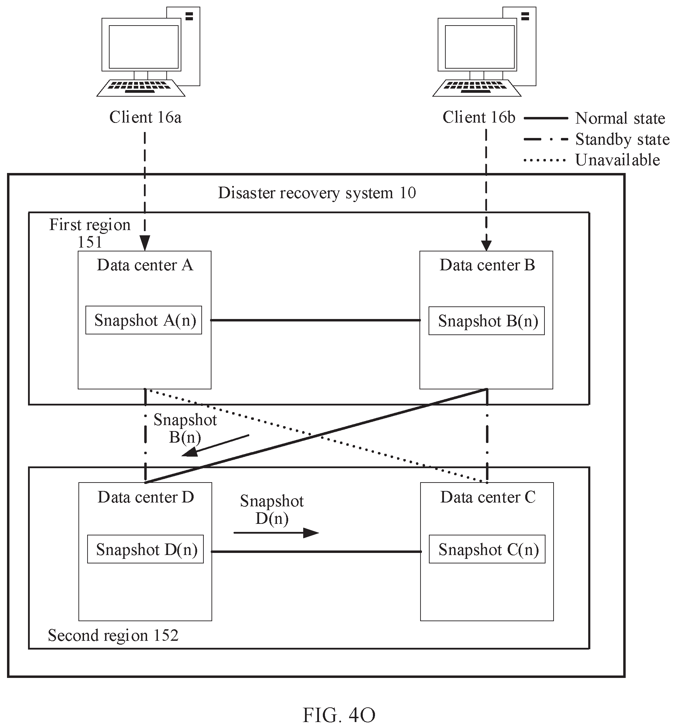

FIG. 4O is a diagram of another operating mechanism of a disaster recovery system in which an asynchronous replication link between the data centers A and C is faulty according to this application. As shown in FIG. 4O, for the foregoing case (c), the asynchronous replication link between the data center B and the data center D is set to a normal state manually or by software, so that the asynchronous replication link operates normally. After the asynchronous replication link can operate normally, the data center B sends the snapshot B(n) to the data center D through the asynchronous replication link within the asynchronous replication periodicity. After the data center D receives, through the asynchronous replication link, the snapshot B(n) sent by the data center B, the storage server D performs a write operation on the metadata B(n) and the data B(n) in the snapshot B(n). After the write operation is completed, the storage server D performs a snapshot generation operation to generate the snapshot D(n), so that the snapshot D(n) of the data center D and the snapshot B(n) of the data center B are periodically synchronized to maintain consistency. Then, the data center D sends the snapshot D(n) to the data center C through the second synchronous replication link. After the data center C receives, through the second synchronous replication link, the snapshot D(n) sent by the data center D, the storage server C performs a write operation on the metadata D(n) and the data D(n) in the snapshot D(n). After the write operation is completed, the data center C obtains the snapshot C(n), so that the snapshot C(n) of the data center C and the snapshot D(n) of the data center D are synchronized in real time to maintain consistency.

It should be understood that the asynchronous replication link between the data center A and the data center C being faulty is merely an example of a link fault. Alternatively, the link fault may be that the asynchronous replication link between the data center A and the data center D is faulty, the asynchronous replication link between the data center B and the data center C is faulty, the asynchronous replication link between the data center B and the data center D is faulty, or the like. This is not specifically limited herein.

In conclusion, if any asynchronous replication link is suddenly faulty, asynchronous replication of snapshots can still be implemented through three remaining asynchronous replication links in the disaster recovery system 10, to achieve snapshot synchronization among the four data centers, so that the disaster recovery scale of the disaster recovery system 10 remains four data centers. Further, if any two asynchronous replication links are suddenly faulty, for example, two asynchronous replication links are faulty simultaneously, or one asynchronous replication link is faulty first, and the other asynchronous replication link is also faulty after operating normally for a period of time, asynchronous replication of snapshots can still be implemented through two remaining asynchronous replication links in the disaster recovery system 10, to achieve snapshot synchronization among the four data centers, so that the disaster recovery scale of the disaster recovery system 10 remains four data centers. Further, if any three asynchronous replication links are suddenly faulty, asynchronous replication of snapshots can still be implemented through one remaining asynchronous replication link in the disaster recovery system 10, to achieve snapshot synchronization among the four data centers, so that the disaster recovery scale of the disaster recovery system 10 remains four data centers. It may be seen that the four asynchronous replication links in the disaster recovery system 10 are backup links for each other.

Based on the foregoing operating mechanisms of the disaster recovery system, the following specifically describes a disaster recovery method provided in this application. The disaster recovery method may be applied to a disaster recovery system provided in this application, to enable disaster recovery performance of the disaster recovery system to degrade in a stepwise manner when a data center is faulty, so as to meet user requirements to a greatest extent.

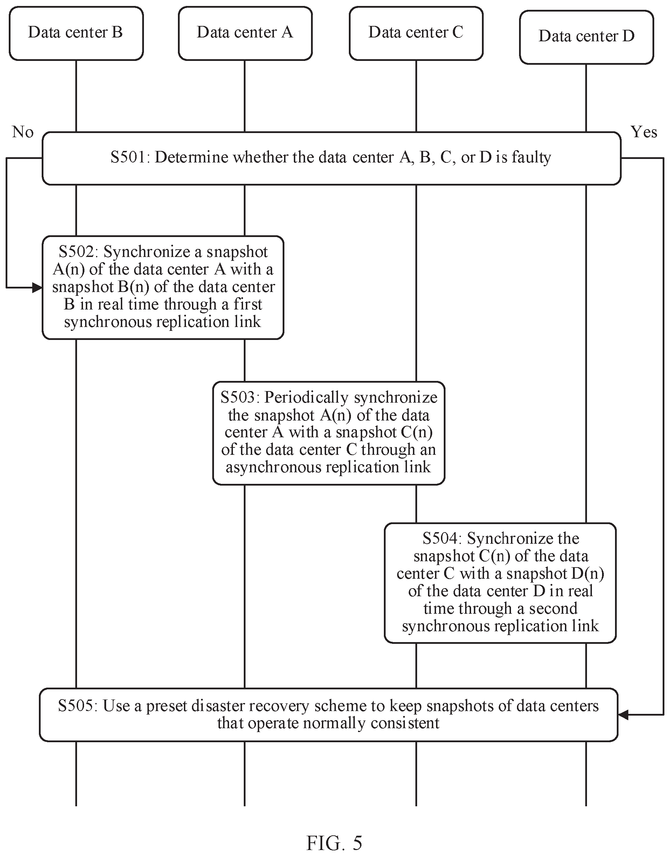

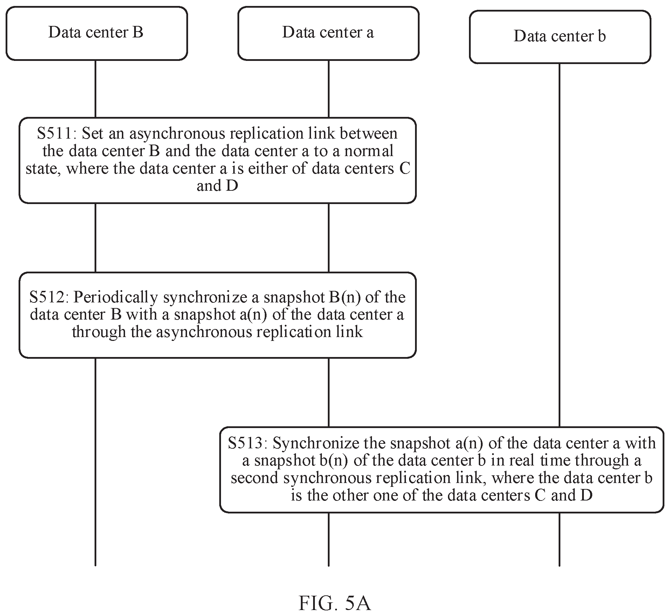

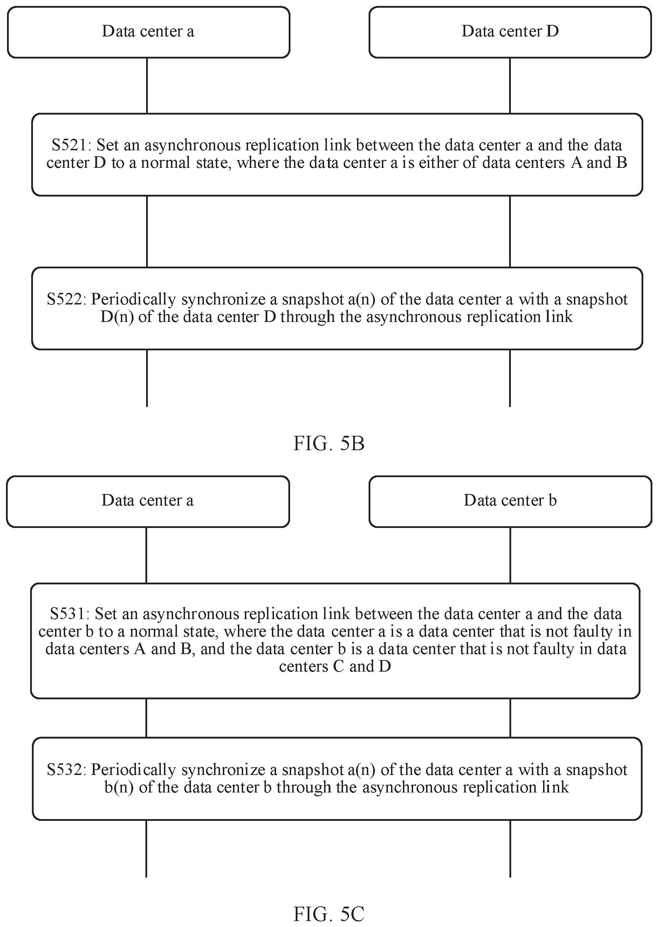

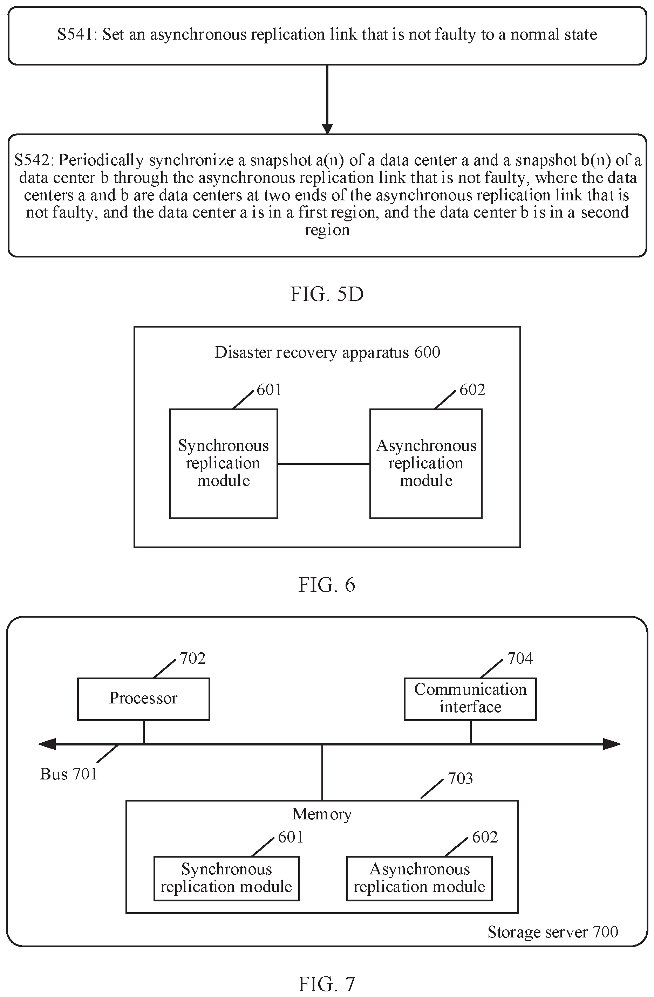

FIG. 5 is a schematic flowchart of a disaster recovery method according to this application. As shown in FIG. 5, the disaster recovery method provided in this application includes the following steps.

S501: Determine whether a data center A, B, C, or D is faulty. If no fault occurs, S502 is performed; if a fault occurs, S505 is performed.

S502: Synchronize a snapshot A(n) of the data center A with a snapshot B(n) of the data center B in real time through a first synchronous replication link.

S503: Periodically synchronize the snapshot A(n) of the data center A with a snapshot C(n) of the data center C through an asynchronous replication link.

S504: Synchronize the snapshot C(n) of the data center C with a snapshot D(n) of the data center D in real time through a second synchronous replication link.

S505: Use a preset disaster recovery scheme to keep snapshots of data centers that operate normally consistent.

The first synchronous replication link may be the first synchronous replication link 171 in the disaster recovery system 10 in FIG. 1, and the second synchronous replication link may be the second synchronous replication link 172 in the disaster recovery system 10 in FIG. 1. The data center A may be the DC 11 or the DC 12 in the disaster recovery system 10 in FIG. 1. When the data center A is the DC 11, the data center C is the DC 13, and the data center B is the DC 12, the asynchronous replication link is the first asynchronous replication link 173. When the data center A is the DC 11, the data center C is the DC 14, and the data center B is the DC 12, the asynchronous replication link is the second asynchronous replication link 174. When the data center A is the DC 12, the data center C is the DC 13, and the data center B is the DC 11, the asynchronous replication link is the third asynchronous replication link 175. When the data center A is the DC 12, the data center C is the DC 14, and the data center B is the DC 11, the asynchronous replication link is the fourth asynchronous replication link 176.

For an execution process of step S502 to step S504, refer to the execution process of step S301 to step S303 in FIG. 3. For brevity of the specification, details are not described herein again.

FIG. 5A is a schematic flowchart of a preset disaster recovery scheme used when the data center A is faulty according to this application. When the data center A is faulty, step S505 in FIG. 5, that is, using the preset disaster recovery scheme to keep the snapshots of the data centers that operate normally consistent, specifically includes the following steps.

S511: Set an asynchronous replication link between the data center B and a data center a to a normal state, where the data center a is either of the data centers C and D.

S512: Periodically synchronize the snapshot B(n) of the data center B with a snapshot a(n) of the data center a through the asynchronous replication link.

S513: Synchronize the snapshot a(n) of the data center a with a snapshot b(n) of a data center b in real time through the second synchronous replication link, where the data center b is the other one of the data centers C and D.

This embodiment corresponds to FIG. 4A, FIG. 4B, and related descriptions thereof, and reference may be made thereto for implementation. Repeated descriptions are not described again.

FIG. 5B is a schematic flowchart of a preset disaster recovery scheme used when the data center C is faulty according to this application. When the data center C is faulty, step S505 in FIG. 5, that is, using the preset disaster recovery scheme to keep the snapshots of the data centers that operate normally consistent, specifically includes the following steps.

S521: Set an asynchronous replication link between a data center a and the data center D to a normal state, where the data center a is either of the data centers A and B.

S522: Periodically synchronize a snapshot a(n) of the data center a with the snapshot D(n) of the data center D through the asynchronous replication link.

This embodiment corresponds to FIG. 4D, FIG. 4E, and related descriptions thereof, and reference may be made thereto for implementation. Repeated descriptions are not described again.

FIG. 5C is a schematic flowchart of a preset disaster recovery scheme used when two data centers are faulty according to this application. When both the data centers A and C are faulty, or both the data centers A and D are faulty, or both the data centers B and C are faulty, step S505 in FIG. 5, that is, using the preset disaster recovery scheme to keep the snapshots of the data centers that operate normally consistent, specifically includes the following steps.

S531: Set an asynchronous replication link between a data center a and a data center b to a normal state, where the data center a is a data center that is not faulty in the data centers A and B, and the data center b is a data center that is not faulty in the data centers C and D.

S532: Periodically synchronize a snapshot a(n) of the data center a with a snapshot b(n) of the data center b through the asynchronous replication link.

This embodiment corresponds to FIG. 4H, FIG. 4I, FIG. 4J, and related descriptions thereof, and reference may be made thereto for implementation. Repeated descriptions are not described again.

FIG. 5D is a schematic flowchart of a preset disaster recovery scheme used when any asynchronous replication link is faulty according to this application. When an asynchronous replication link between the data center A and the data center C is faulty, or an asynchronous replication link between the data center A and the data center D is faulty, or an asynchronous replication link between the data center B and the data center C is faulty, or an asynchronous replication link between the data center B and the data center D is faulty, step S505 in FIG. 5, that is, using the preset disaster recovery scheme to keep the snapshots of the data centers that operate normally consistent, specifically includes the following steps.

S541: Set an asynchronous replication link that is not faulty to a normal state.

S542: Periodically synchronize a snapshot a(n) of a data center a and a snapshot b(n) of a data center b through the asynchronous replication link that is not faulty, where the data centers a and b are data centers at two ends of the asynchronous replication link that is not faulty, and the data center a is in a first region, and the data center b is in a second region.

This embodiment corresponds to FIG. 4M, FIG. 4N, FIG. 4O, and related descriptions thereof, and reference may be made thereto for implementation. Repeated descriptions are not described again.

In conclusion, in the disaster recovery method provided in this application, because full-mesh networking among four data centers is implemented in a disaster recovery system, provided that there is still an asynchronous replication link operating normally, snapshot synchronization between two data centers at two ends of the asynchronous replication link that operates normally can be implemented through the asynchronous replication link that operates normally, to keep the snapshots of the data centers that operate normally consistent. In addition, there is a disaster recovery protection relationship between any two data centers that operate normally, so that disaster recovery performance of the disaster recovery system degrades in a stepwise manner, to meet user requirements to a greatest extent.

FIG. 6 is a diagram of a structure of a disaster recovery apparatus according to this application. The disaster recovery apparatus 600 is configured to serve as a first disaster recovery apparatus, and may implement the foregoing disaster recovery method. As shown in FIG. 6, the disaster recovery apparatus 600 includes a synchronous replication module 601 and an asynchronous replication module 602.

The synchronous replication module 601 is configured to synchronously replicate backup data to a second disaster recovery apparatus through a first synchronous replication link.

The asynchronous replication module 602 is configured to, when a third disaster recovery apparatus is normal, asynchronously replicate backup data to the third disaster recovery apparatus through a first asynchronous replication link.

The asynchronous replication module 602 is further configured to, when the third disaster recovery apparatus is faulty, asynchronously replicate backup data to a fourth disaster recovery apparatus through a second asynchronous replication link.

Both the disaster recovery apparatus 600 and the second disaster recovery apparatus are production centers, the disaster recovery apparatus 600 and the second disaster recovery apparatus are located in a first region, both the third disaster recovery apparatus and the fourth disaster recovery apparatus are disaster recovery centers, and the third disaster recovery apparatus and the fourth disaster recovery apparatus are located in a second region different from the first region.

In some possible implementations, the backup data is a snapshot or a log.

In some possible implementations, the disaster recovery apparatus 600 and the second disaster recovery apparatus provide a same service and a same logical unit number LUN externally, to enable a client to access the disaster recovery apparatus 600 or the second disaster recovery apparatus via the LUN, and to enable, when the disaster recovery apparatus 600 or the second disaster recovery apparatus is faulty, access of the client to be switched, via the LUN, to a disaster recovery apparatus that is not faulty in the disaster recovery apparatus 600 and the second disaster recovery apparatus.

In some possible implementations, the synchronous replication module 601 is specifically configured to synchronously replicate, to the second disaster recovery apparatus through the first synchronous replication link, the backup data and data generated during access of the client to the disaster recovery apparatus 600.

The synchronous replication module 601 and the asynchronous replication module 602 may both be implemented by software, or may be implemented by hardware. For example, the following describes an implementation of the synchronous replication module 601 by using the synchronous replication module 601 as an example. Similarly, for an implementation of the asynchronous replication module 602, refer to the implementation of the synchronous replication module 601.

A module is used as an example of a software functional unit, and the synchronous replication module 601 may include code run on a computing instance. The computing instance may include at least one of a physical host (a compute device), a virtual machine, and a container. Further, there may be one or more computing instances. For example, the synchronous replication module 601 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is disposed in one region. A communication gateway needs to be disposed in each VPC for communication between two VPCs in a same region and cross-region communication between VPCs in different regions. Interconnection between VPCs is implemented through the communication gateway.

The module is used as an example of a hardware functional unit, and the synchronous replication module 601 may include at least one compute device, for example, a server. Alternatively, the synchronous replication module 601 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

The plurality of compute devices included in the synchronous replication module 601 may be distributed in a same region, or may be distributed in different regions. The plurality of compute devices included in the synchronous replication module 601 may be distributed in a same AZ, or may be distributed in different AZs. Similarly, the plurality of compute devices included in the synchronous replication module 601 may be distributed in a same VPC, or may be distributed in a plurality of VPCs. The plurality of compute devices may be any combination of compute devices such as the server, the ASIC, the PLD, the CPLD, the FPGA, and the GAL.

It should be noted that, in another embodiment, the synchronous replication module 601 may be configured to perform any step in the disaster recovery method, the asynchronous replication module 602 may be configured to perform any step in the disaster recovery method. Steps implemented by the synchronous replication module 601 and the asynchronous replication module 602 may be specified as required. The synchronous replication module 601 and the asynchronous replication module 602 respectively implement different steps in the disaster recovery method to implement all functions of the disaster recovery apparatus 600.

According to the disaster recovery method provided in this application, this application further provides a disaster recovery system. The disaster recovery system includes the foregoing disaster recovery apparatus 600.

FIG. 7 is a diagram of a structure of a storage server according to this application. As shown in FIG. 7, the storage server 700 includes a bus 701, a processor 702, a memory 703, and a communication interface 704. The processor 702, the memory 703, and the communication interface 704 communicate with each other through the bus 701. It should be understood that a quantity of processors and a quantity of memories in the storage server 700 are not limited in this application.

The bus 701 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 7. However, this does not indicate that there is only one bus or only one type of bus. The bus 701 may include a path for information transmission between components (for example, the memory 703, the processor 702, and the communication interface 704) of the storage server 700.

The processor 702 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 703 may include a volatile memory (volatile memory), for example, a random access memory (random access memory, RAM). The memory 703 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 703 stores executable program code, and the processor 702 executes the executable program code to separately implement functions of the synchronous replication module 601 and the asynchronous replication module 602, to implement the disaster recovery method. In other words, the memory 703 stores instructions used to perform the disaster recovery method.

The communication interface 704 uses a transceiver unit, for example, but not limited to, a network interface card or a transceiver, to implement communication between the storage server 700 and another device or a communication network.

According to the disaster recovery method provided in this application, this application further provides a disaster recovery system. The disaster recovery system includes the foregoing storage server 700.

This application further provides a computer program product including instructions. The computer program product may be software or a program product that includes instructions and that can be run on a compute device or that can be stored in any usable medium. When the computer program product is run on at least one compute device, the at least one compute device is caused to perform the disaster recovery method.

This application further provides a computer-readable storage medium. The computer-readable storage medium may be any usable medium that can be stored by a compute device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the disaster recovery method.

It should be understood that, in embodiments of the present invention, both "when" and "if" mean that a device performs corresponding processing in an objective situation, and are not limited to time. The terms do not mean that the device needs to perform a determining action during implementation, and do not mean other limitation.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

## Claims

1. A disaster recovery system, comprising: a first data center, a second data center, a third data center, and a fourth data center, wherein both the first data center and the second data center are production centers, both the third data center and the fourth data center are disaster recovery centers, the first data center and the second data center are located in a first region, and the third data center and the fourth data center are located in a second region different from the first region;
a first synchronous replication link exists between the first data center and the second data center,
a second synchronous replication link exists between the third data center and the fourth data center, and
a first asynchronous replication link exists between the first data center and the third data center; and
the disaster recovery system further comprises one, two or three of the following backup asynchronous replication links:
a second asynchronous replication link between the first data center and the fourth data center;
a third asynchronous replication link between the second data center and the third data center; or
a fourth asynchronous replication link between the second data center and the fourth data center.

2. The disaster recovery system according to claim 1, wherein a synchronous replication link is used for synchronous replication of backup data of data centers at two ends of the synchronous replication link; and an asynchronous replication link is used for asynchronous replication of backup data of data centers at two ends of the asynchronous replication link.

3. The disaster recovery system according to claim 1 or 2, wherein the backup asynchronous replication link is used for asynchronous replication of backup data between the first region and the second region when the first data center or the third data center is faulty.

4. The disaster recovery system according to any one of claims 1 to 3, wherein the plurality of backup asynchronous replication links are backup links for each other.

5. The disaster recovery system according to any one of claims 2 to 4, wherein the backup data is a snapshot or a log.

6. The disaster recovery system according to any one of claims 1 to 5, wherein
the first data center and the second data center are active-active data centers, and the first data center and the second data center are configured to provide a same service and a same logical unit number LUN externally, to enable a client to access the first data center or the second data center via the LUN, and to enable, when the first data center or the second data center is faulty, access of the client to be switched, via the LUN, to a data center that is not faulty in the first data center and the second data center.

7. The disaster recovery system according to any one of claims 1 to 6, wherein
the third data center and the fourth data center are active-active data centers, and the third data center and the fourth data center are configured to provide a same service and a same logical unit number LUN externally, to enable the client to access the third data center or the fourth data center via the LUN, and to enable, when the third data center or the fourth data center is faulty, access of the client to be switched, via the LUN, to a data center that is not faulty in the third data center and the fourth data center.

8. A disaster recovery method, comprising:
synchronously replicating, by a first data center, backup data to a second data center through a first synchronous replication link, wherein both the first data center and the second data center are production centers, and the first data center and the second data center are located in a first region; and
when a third data center is normal, asynchronously replicating, by the first data center, the backup data to the third data center through a first asynchronous replication link, wherein the third data center is a disaster recovery center, and the third data center is located in a second region different from the first region; or
when the third data center is faulty, asynchronously replicating, by the first data center, the backup data to a fourth data center through a second asynchronous replication link, wherein the fourth data center is a disaster recovery center, and the fourth data center is located in the second region.

9. The method according to claim 8, wherein the method further comprises:
when the first data center is faulty, asynchronously replicating, by the second data center, the backup data to the third data center through a third asynchronous replication link, or asynchronously replicating, by the second data center, the backup data to the fourth data center through a fourth asynchronous replication link.

10. The method according to claim 8 or 9, wherein the backup data is a snapshot or a log.

11. The method according to any one of claims 8 to 10, wherein
the first data center and the second data center are active-active data centers, and the first data center and the second data center provide a same service and a same logical unit number LUN externally, to enable a client to access the first data center or the second data center via the LUN, and to enable, when the first data center or the second data center is faulty, access of the client to be switched, via the LUN, to a data center that is not faulty in the first data center and the second data center.

12. The method according to claim 11, wherein the synchronously replicating, by the first data center, the backup data to the second data center through the first synchronous replication link comprises:
synchronously replicating, by the first data center to the second data center through the first synchronous replication link, the backup data and data generated during access of the client to the first data center.

13. The method according to any one of claims 8 to 12, wherein
the third data center and the fourth data center are active-active data centers, and the third data center and the fourth data center provide a same service and a same logical unit number LUN externally, to enable the client to access the third data center or the fourth data center via the LUN, and to enable, when the third data center or the fourth data center is faulty, access of the client to be switched, via the LUN, to a data center that is not faulty in the third data center and the fourth data center.

14. A disaster recovery apparatus, used as a first disaster recovery apparatus, and comprising a synchronous replication module and an asynchronous replication module, wherein
the synchronous replication module is configured to synchronously replicate backup data to a second disaster recovery apparatus through a first synchronous replication link, wherein both the first disaster recovery apparatus and the second disaster recovery apparatus are production centers, and the first disaster recovery apparatus and the second disaster recovery apparatus are located in a first region;
the asynchronous replication module is configured to, when a third disaster recovery apparatus is normal, asynchronously replicate the backup data to the third disaster recovery apparatus through a first asynchronous replication link, wherein the third disaster recovery apparatus is a disaster recovery center, and the third disaster recovery apparatus is located in a second region different from the first region; and
the asynchronous replication module is further configured to, when the third disaster recovery apparatus is faulty, asynchronously replicate the backup data to a fourth disaster recovery apparatus through a second asynchronous replication link, wherein the fourth disaster recovery apparatus is a disaster recovery center, and the fourth disaster recovery apparatus is located in the second region.

15. A storage server, comprising a processor and a memory, wherein the memory is configured to store instructions, the processor is configured to execute the instructions, and when the processor executes the instructions, the disaster recovery method according to any one of claims 8 to 13 is implemented.

16. A computer program product comprising instructions, wherein when the instructions are run by a compute device, the compute device is caused to perform the disaster recovery method according to any one of claims 8 to 13.

17. A computer-readable storage medium, comprising computer program instructions, wherein when the computer program instructions are executed by a compute device, the compute device performs the disaster recovery method according to any one of claims 8 to 13.
